# EUROPEAN PATENT SPECIFICATION

(11) **EP 3 718 766 B1**
(45) Date of publication and mention of the grant of the patent: **20.11.2024**
(21) Application number: 19167539.6
(22) Date of filing: 05.04.2019
(51) Int. Cl.: B32B 15/08, B32B 29/00, B32B 27/32, B32B 27/10, B32B 27/08, B32B 15/20, B32B 15/085, B32B 1/00

(54) **SHEETLIKE COMPOSITE, IN PARTICULAR FOR THE PRODUCTION OF DIMENSIONALLY STABLE FOODSTUFF CONTAINERS, HAVING AN OUTER POLYMER LAYER WHICH IS SUPERIMPOSED ON A COLOUR APPLICATION**
BLATTFÖRMIGER VERBUNDSTOFF, INSBESONDERE ZUR HERSTELLUNG VON FORMSTABILEN LEBENSMITTELBEHÄLTERN MIT EINER ÄUSSEREN POLYMERSCHICHT, DIE EINEM FARBAUFTRAG ÜBERLAGERT IST
COMPOSITE DE TYPE FEUILLE, EN PARTICULIER POUR LA FABRICATION DE CONTENANTS ALIMENTAIRES DIMENSIONNELLEMENT STABLES COMPORTANT UNE COUCHE POLYMÈRE EXTERNE SUPERPOSÉE SUR UNE APPLICATION DE COULEUR

(43) Date of publication of application: 07.10.2020
(73) Proprietor: SIG Services AG, 8212 Neuhausen am Rheinfall (CH)
(72) Inventor: REB, Gabriele, 52428 Jülich (DE); RITZ, Marcel, 52445 Titz (DE); WAGNER, Jana, 52525 Heinsberg (DE)
(74) Representative: Herzog IP Patentanwalts GmbH

(56) References cited:
- WO-A1-2015/101540

## Description

The present invention refers to a sheetlike composite, comprising as a layer sequence in a direction from an outer surface of the sheetlike composite to an inner surface of the sheetlike composite
a) an outer polymer layer,
b) a colour application,
c) a carrier layer, and
d) a barrier layer;
wherein the outer polymer layer is characterised by a density in a range from 920 to 925 kg/m³, wherein the density is measured in accordance with the standard DIN EN ISO 1183-1:2012-04, method B and applying a liquid pycnometer, wherein the sample to be studied is conditioned in accordance with DIN EN ISO 1872-1:199-10, distilled water is used as immersion liquid, the test temperature is 23 °C and no buoyancy correction is applied; wherein the outer polymer layer (103) is further characterised by a melting temperature according to the test method described herein in the range from 107.5 to 115 °C; wherein the outer polymer layer comprises at least 50 wt.-%, based on the outer polymer layer, of at least one polyolefin. The invention further refers to a container precursor and to a container, in each case comprising at least part of the preceding sheetlike composite; to processes for preparing a sheetlike composite, a container precursor, and a closed container; to products of the preceding processes; and to uses of the sheetlike composite, and of a polyolefin.

For some time, foodstuffs have been preserved, whether they be foodstuffs for human consumption or else animal feed products, by storing them either in a can or in a jar closed by a lid. In this case, shelf life can be increased firstly by separately and very substantially sterilising the foodstuff and the container in each case, here the jar or can, and then introducing the foodstuff into the container and closing the container. However, these measures of increasing the shelf life of foodstuffs, which have been tried and tested over a long period, have a series of disadvantages, for example the need for another sterilisation later on. Cans and jars, because of their essentially cylindrical shape, have the disadvantage that very dense and space-saving storage is not possible. Moreover, cans and jars have considerable intrinsic weight, which leads to increased energy expenditure in transport. Moreover, production of glass, tinplate or aluminium, even when the raw materials used for the purpose are recycled, necessitates quite a high expenditure of energy. In the case of jars, an aggravating factor is elevated expenditure on transport. The jars are usually prefabricated in a glass factory and then have to be transported to the facility where the foodstuff is dispensed with utilisation of considerable transport volumes. Furthermore, jars and cans can be opened only with considerable expenditure of force or with the aid of tools and hence in a rather laborious manner. In the case of cans, there is a high risk of injury emanating from sharp edges that arise on opening. In the case of jars, it is a repeated occurrence that broken glass gets into the foodstuff in the course of filling or opening of the filled jars, which can lead in the worst case to internal injuries on consumption of the foodstuff. In addition, both cans and jars have to be labelled for identification and promotion of the foodstuff contents. The jars and cans cannot be printed directly with information and promotional messages. In addition to the actual printing, a substrate is thus needed for the purpose, a paper or suitable film, as is a securing means, an adhesive or sealant.

Other packaging systems are known from the prior art, in order to store foodstuffs over a long period with minimum impairment. These are containers produced from sheetlike composites - frequently also referred to as laminates. Sheetlike composites of this kind are frequently constructed from an outer polymer layer, a carrier layer usually consisting of cardboard or paper which imparts dimensional stability to the container, an adhesion promoter layer, a barrier layer and an inner polymer layer, as disclosed inter alia in WO 90/09926 A2. As the carrier layer imparts rigidity and dimensional stability to the container produced from the laminate, these laminate containers are to be seen in a line of development with the above mentioned glasses and jars. In this, the above mentioned laminate containers differ severely from pouches and bags produced from thin foils without carrier layer.

In the prior art, WO 2015/101540 A1 discloses a packaging container for liquid or semi-liquid food. The packaging container is manufactured from a packaging material and has a moulded opening device. The packaging material comprises a bulk layer, which on one side has a heatsealing layer, and comprises one or more weakening(s) in direct or indirect contact with an attenuation or a hole in the packaging material.

The laminate containers of the prior art already have many advantages over the conventional jars and cans. For example, a decoration or print image can be printed directly onto the laminate or laminate precursor without the need for a separate substrate. Such a decoration may comprise information about ingredients of the foodstuff to be stored in the laminate container and/or provide a visually appealing appearance to the consumer. Nevertheless, there are improvement opportunities even in the case of these packaging systems.

The prior art knows laminates which have the outer polymer layer disposed between the decoration and the carrier layer and also laminates in which the decoration is positioned between the outer polymer layer and the carrier layer. To the detriment of, in particular, the latter case, it has been observed that the outer polymer layer can cause severe processing problems. More specifically, the containers are often closed in their top region after filling with foodstuff via ultrasound sealing. Therein, sealing tools - a sonotrode and a counter tool called anvil - contact the laminate on its outer side and soften the outer polymer coating in order for it to work as a sealant. In the course of sealing, polymer material of the outer polymer layer can detach from the laminate and accumulate on the sealing tools. If too much polymer is accumulated, the material can stain further containers to be sealed. As a clean high quality decoration is a key requirement to foodstuff containers, production has to be stopped, the sealing tools have to be cleaned and readjusted, the latter of which represents a particularly laborious and time-consuming task. Hence, productivity drops. In addition, upon ultrasound sealing, the laminate can stick to the sealing tools. Delamination of the laminate can occur. The cardboard carrier layer can even be torn apart. Needless to say that, in such cases, no quality containers with clean and tight top seals are obtained.

In view of the above discussed problems, it is particularly surprising that in making the invention it has been found that a technically particularly advantageous performance can be obtained for laminates in which the decoration is disposed between the outer polymer layer and the carrier layer if the outer polymer layer is designed to have a density in a specific range. Besides the finding of laminates having the preceding sequence of layers showing good results in ultrasound sealing at all, it is particularly surprising that the outer polymer layer should be designed in terms of its density and not primarily, i.e. as a first stage selection criterion, in terms of melting temperature or melt flow index.

In general terms, it is an object of the present invention to at least partly overcome at least one disadvantage which arises from the prior art.

It is a further object of the invention to provide a laminate which is suitable for being processed at high production rate to obtain dimensionally stable foodstuff containers having an as long as possible shelf life. Therein, the production rate is, preferably, high in terms of an as long as possible maintenance period of tools used to manufacture and/or process the laminate. Preferred such tools are grooving tools and/or ultrasound sealing tools used to close the containers by creating a top seal. Additionally or alternatively preferred, production times are low. Further, a high shelf life is, preferably, obtained by the containers being as leak tight as possible. Leak tightness refers, preferably, in particular to a top seal of the containers. Additionally or alternatively, a high shelf life is, preferably, obtained by low oxygen and/or water vapour transmission rates of the container.

According to a further object of the invention, one of the preceding advantageous laminates can, in addition, be manufactured using an as space saving as possible production line. According to a further object of the invention, one of the preceding advantageous laminates can, in addition, be manufactured applying a laminar extrusion coating process, thereby obtaining an as uniform as possible polymer layer, in particular an as uniform as possible outer polymer layer. Here, the laminate can, preferably, be manufactured with as little as possible edge waving. According to yet a further object of the invention, one of the preceding advantageous laminates can, in addition, be printed with a decoration in an as less demanding and complex way as possible, in particular in terms of a register control. It is a further object of the invention to provide one of the preceding advantageous laminates, wherein no additional sealant needs to be applied to the laminate for sealing fold flaps to a container body. According to yet a further object of the invention, from one of the preceding advantageous laminates dimensionally stable foodstuff containers can be produced which are suitable for being transported and stored, in particular in stacks, in a humid environment. According to a further object of the invention, dimensionally stable foodstuff containers can be manufactured from one of the preceding advantageous laminates in an energy saving manner. According to still a further object of the invention, one of the preceding advantageous laminates can, in addition, be processed to the dimensionally stable foodstuff containers via folding the laminate as accurate as possible.

Further, it is an object of the invention, to provide a process of preparing a foodstuff container from the aforementioned advantageous laminate. According to a further object of the invention, the preceding process shows an increased production rate, preferably in terms of an as high as possible maintenance period of grooving tools and/or ultrasound sealing tools used to close the containers, or a reduced substandard rate, in particular in terms of a top seal, or both.

A contribution to at least partial achievement of at least one of the above objects is made by the independent claims. The dependent claims provide preferred embodiments which contribute to at least partial achievement of at least one of the objects. The scope of the invention is defined by the claims.

A contribution to the achievement of at least one of the objects of the invention is made by an embodiment of a sheetlike composite 1, comprising as a layer sequence in a direction from an outer surface of the sheetlike composite to an inner surface of the sheetlike composite
a) an outer polymer layer,
b) a colour application,
c) a carrier layer, and
d) a barrier layer;
wherein the outer polymer layer is characterised by a density in a range from 920 to 925 kg/m³, preferably from 921 to 925 kg/m³, more preferably from 921.5 to 924.5 kg/m³, more preferably from 922 to 924 kg/m³, even more preferably from 922.5 to 923.5 kg/m³; wherein the outer polymer layer is further characterised by a melting temperature in the range from 107.5 to 115 °C; wherein the outer polymer layer comprises at least 50 wt.-%, based on the outer polymer layer, of at least one polyolefin. In another preferred embodiment of the sheetlike composite 1, the outer polymer layer is characterised by a density in a range from 922 to 925 kg/m³, more preferably from 923 to 925 kg/m³. Most preferably, the outer polymer layer has a density of about 923 kg/m³. A preferred sheetlike composite is a sheetlike composite for preparing at least one foodstuff container.

In a preferred embodiment of the sheetlike composite 1 the outer polymer layer is further characterised by a melt flow index in the range from 2 to 6 g/10 min, preferably from 2.5 to 5.5 g/10 min, more preferably from 3 to 5 g/10 min, more preferably from 3.5 to 5 g/10 min, more preferably from 3.7 to 4.8 g/10 min, even more preferably from 3.9 to 4.5 g/10 min. In another preferred embodiment, the outer polymer layer is further characterised by a melt flow index in the range from 2 to 4.9 g/10 min, preferably 2 to 4.8 g/10 min, more preferably 2 to 4.7g/10 min, more preferably 2 to 4.6 g/10 min, more preferably 2 to 4.5 g/10 min, most preferably 3 to 4.5 g/10 min. Most preferably, the outer polymer layer has a melt flow index of about 4 g/10 min.

In a preferred embodiment of the sheetlike composite 1 the outer polymer layer comprises at least 60 wt.-%, preferably at least 70 wt.-%, more preferably at least 80 wt.-%, more preferably at least 90 wt.-%, even more preferably at least 95 wt.-%, in each case based on the outer polymer layer, of at least one polyolefin. Most preferably, the outer polymer layer consists of the at least one polyolefin. In a preferred embodiment, the outer polymer layer comprises exactly one polyolefin in one of the preceding proportions and optionally one or more further polyolefins.

In a preferred embodiment of the sheetlike composite 1 the at least one polyolefin is a polyethylene. Preferably, the polyethylene is a low density polyethylene (LDPE). Further, the polyethylene is, preferably, not an mPE.

In a preferred embodiment of the sheetlike composite 1 the colour application adjoins the carrier layer. Hence, according to this preferred embodiment, there is no layer present between the colour application and the carrier layer.

In a preferred embodiment of the sheetlike composite 1 the outer polymer layer adjoins the colour application.

In a preferred embodiment of the sheetlike composite 1 the outer polymer layer is an outermost layer of the sheetlike composite. Preferably, no layer of the sheetlike composite superimposes the outer polymer layer on a side of the outer polymer layer which faces away from the carrier layer.

In a preferred embodiment of the sheetlike composite 1 the outer polymer layer does not include a low density polyethylene, preferably a polyethylene in general, having a melt flow index in the range from 6.5 to 7.5 g/10 min in a proportion of more than 40 wt.%, preferably more than 30 wt.-%, more preferably more than 20 wt.-%, more preferably more than 10 wt.-%, even more preferably more than 5 wt.-%, in each case based on the outer polymer layer. Even more preferably, the outer polymer layer does essentially not include a low density polyethylene, preferably a polyethylene in general, having a melt flow index of about 7 g/10 min. Most preferably, the outer polymer layer is essentially free from low density polyethylene, preferably a polyethylene in general, having a melt flow index of about 7 g/10 min.

In a further preferred embodiment, the outer polymer layer does not include a low density polyethylene or an mPE or both, preferably a polyethylene in general, having a density of 918.5 kg/m³ or less, preferably of 919 kg/m³ or less, more preferably of 919.5 kg/m³ or less, more preferably of 920 kg/m³ or less, more preferably of 920.5 kg/m³ or less, more preferably of 921 kg/m³ or less, even more preferably of 921.5 kg/m³ or less, most preferably of 922 kg/m³ or less, in each case in a proportion of more than 40 wt.%, preferably more than 30 wt.-%, more preferably more than 20 wt.-%, more preferably more than 10 wt.-%, even more preferably more than 5 wt.-%, in each case based on the outer polymer layer. Even more preferably, the outer polymer layer is essentially free of any low density polyethylene or any mPE or both, preferably any polyethylene in general, having a density of 918.5 kg/m³ or less, preferably of 919 kg/m³ or less, more preferably of 919.5 kg/m³ or less, more preferably of 920 kg/m³ or less, more preferably of 920.5 kg/m³ or less, more preferably of 921 kg/m³ or less, even more preferably of 921.5 kg/m³ or less, most preferably of 922 kg/m³ or less. Further preferably, the outer polymer layer does not include a low density polyethylene, preferably a polyethylene in general, having a density of about 919 kg/m³, preferably in a range from 917.5 to 920.5 kg/m³, in a proportion of more than 40 wt.%, preferably more than 30 wt.-%, more preferably more than 20 wt.-%, more preferably more than 10 wt.-%, even more preferably more than 5 wt.-%, in each case based on the outer polymer layer. Even more preferably, the outer polymer layer is essentially free of any low density polyethylene, preferably any polyethylene in general, having a density of about 919 kg/m³, preferably in a range from 917.5 to 920.5 kg/m³.

In a preferred embodiment of the sheetlike composite 1 the sheetlike composite comprises at least one, preferably at least two, more preferably at least three, most preferably at least four, longitudinal groove(s); wherein the at least one longitudinal groove is oriented in a first direction; wherein the sheetlike composite has a first bending resistance in the first direction; wherein a further direction is perpendicular to the first direction; wherein the sheetlike composite has a further bending resistance in the further direction; wherein the first bending resistance is less than the further bending resistance. Preferably, the first bending resistance is less than the further bending resistance by at least 10 mN, more preferably at least 20 mN, more preferably at least 30 mN, more preferably at least 40 mN, more preferably at least 50 mN, more preferably at least 60 mN, more preferably at least 70 mN, more preferably at least 80 mN, more preferably at least 90 mN, more preferably at least 100 mN, most preferably at least 150 mN. The first bending resistance is preferably in the range from 50 to 750 mN, more preferably from 100 to 700 mN. The further bending resistance is preferably in the range from 50 to 800 mN, more preferably from 50 to 750 mN. In a further embodiment, the further bending resistance is preferably in the range from 60 to 800 mN, more preferably from 70 to 800 mN, more preferably from 80 to 800 mN, more preferably from 90 to 800 mN, more preferably from 100 to 800 mN, most preferably from 100 to 750 mN. In the further direction, the carrier layer preferably has a bending resistance in the range from 70 to 700 mN, more preferably from 80 to 650 mN. In the first direction the carrier layer preferably has bending resistance in the range from 10 to 350 mN, more preferably from 20 to 300 mN. Preferably, the sheetlike composite extends sheetlike in a plane, wherein the first direction and the further direction are both in the plane. Preferably, the first direction and the further direction are both perpendicular to a thickness of the sheetlike composite. A preferred sheetlike composite is a pre-cut for the production of a single container.

In a preferred embodiment of the sheetlike composite 1 a ratio of the first bending resistance to the further bending resistance is in the range from 1:10 to 1:1.5, more preferably from 1:9 to 1:1.5, more preferably from 1:8 to 1:1.5, more preferably from 1:7 to 1:1.5, more preferably from 1:6 to 1:1.5, more preferably from 1:5 to 1:1.5, most preferably from 1:5 to 1:2.

In a preferred embodiment of the sheetlike composite 1 the carrier layer comprises a plurality of fibres, wherein at least 55 %, preferably at least 60 %, more preferably at least 70 %, most preferably at least 80 %, of the fibres of the plurality of fibres incline an angle of less than 30°, preferably less than 25°, more preferably less than 20°, more preferably less than 15°, most preferably less than 10°, with the further direction. Therein, no correlation between the preferred values for the fraction of the fibres of the plurality fulfilling the preceding criterion and for the angles of inclination is implied. Hence, any percentage according to the embodiment 11 may be combined with any angle disclosed in the context of the embodiment 11, thereby obtaining a preferred item according to the invention. Consequently, as an example also at least 80 % of the fibres of the plurality of fibres inclining an angle of less than 30° with the further direction is a preferred combination.

Preferably, the carrier layer comprises a plurality of fibres. Therein, the fibres are preferably one selected from the group consisting of primary fibres obtained from wood, secondary fibres obtained from paper, textile fibres, and synthetic fibres, or a combination of at least two thereof. Further preferably, the carrier layer, comprising a plurality of fibres, is characterised by a running direction, also known as fibre run. Therein, the running direction is a direction in which a primary material, comprising the fibres, was predominantly moved in the production of the carrier layer. Preferably, the running direction and the further direction incline an angle of less than 30°, preferably less than 25°, more preferably less than 20°, more preferably less than 15°, most preferably less than 10. A preferred primary material is pulp.

In a preferred embodiment of the sheetlike composite 1 the carrier layer is characterized by a basis weight within a range from 140 to 400 g/m², preferably from 150 to 350 g/m², more preferably from 160 to 330 g/m², even more preferably from 160 to 300 g/m², even more preferably from 160 to 250 g/m², most preferably from 160 to 240 g/m².

In a preferred embodiment of the sheetlike composite 1 the carrier layer includes, preferably consists of, one selected from the group consisting of paperboard, cardboard, and paper, or a combination of at least two thereof. The terms "paper", "paperboard" and "cardboard" are used herein in accordance with the definitions in the standard DIN 6735:2010. In addition, cardboard is preferably a material which shows a mixture of features of paper and paperboard. Further, cardboard preferably has a grammage in the range from 150 to 600 g/m².

In a preferred embodiment of the sheetlike composite 1 the colour application comprises at least 10 wt.-%, preferably at least 15 wt.-%, more preferably at least 20 wt.-%, more preferably at least 30 wt.-%, more preferably at least 40 wt.-%, even more preferably at least 50 wt.-%, most preferably at least 60 wt.-%, in each case of at least one colourant, based on the weight of the colour application. Preferably, the colour application comprises at least colourant in a proportion in a range from 10 to 85 wt.-%, more preferably from 20 to 80 wt.-%, based in each case on the weight of the colour application.

In a preferred embodiment of the sheetlike composite 1 the colour application comprises at least 10 wt.-%, preferably at least 20 wt.-%, more preferably at least 30 wt.-%, more preferably at least 40 wt.-%, even more preferably at least 50 wt.-%, most more preferably at least 60 wt.-%,of a styrene copolymer, in each case based on the weight of the colour application. Preferably, the colour application comprises the styrene copolymer in a proportion in a range from 30 to 90 wt.-%, more preferably from 40 to 85 wt.-%, most preferably from 50 to 80 wt.-%, based in each case on the weight of the colour application. A preferred styrene copolymer is a styrene acrylate copolymer. Preferably, the styrene acrylate copolymer has a high acid number to allow for dispersing a pigment. The styrene copolymer preferably works as a binder in the colour application, which has preferably been obtained from an ink by hardening this ink.

In a preferred embodiment of the sheetlike composite 1 the colour application comprises at least 10 wt.-%, preferably at least 20 wt.-%, more preferably at least 30 wt.-%, even more preferably at least 40 wt.-%, most preferably at least 50 wt.-%, of nitrocellulose, in each case based on the weight of the colour application. Preferably, the colour application comprises 10 to 80 wt.-%, more preferably 20 to 70 wt.-%, even more preferably 30 to 70 wt.-%, most preferably 40 to 70 wt.-%, in each case based on the weight of the colour application, of nitrocellulose.

In a preferred embodiment of the sheetlike composite 1 the outer polymer layer is characterised by a melting temperature in the range from 108 to 115 °C, more preferably from 108 to 114 °C, more preferably from 108 to 113 °C, more preferably from 108 to 112 °C, more preferably from 109 to 112 °C, most preferably from 110 to 112 °C. In another preferred embodiment, the outer polymer layer is further characterised by a melting temperature in the range from 107.5 to 114 °C, more preferably from 107.5 to 113 °C, most preferably from 107.5 to 112 °C.

In a further preferred embodiment, the outer polymer layer does not include a low density polyethylene or an mPE or both, preferably a polyethylene in general, having a melting temperature of 107 °C or less, preferably of 107.5 °C or less, more preferably of less than 108 °C, in each case in a proportion of more than 40 wt.%, preferably more than 30 wt.-%, more preferably more than 20 wt.-%, more preferably more than 10 wt.-%, even more preferably more than 5 wt.-%, in each case based on the outer polymer layer. Even more preferably, the outer polymer layer is essentially free of any low density polyethylene or any mPE or both, preferably any polyethylene in general, having a melting temperature of 107 °C or less, preferably of 107.5 °C or less, more preferably of less than 108 °C. Further preferably, the outer polymer layer does not include a low density polyethylene, preferably a polyethylene in general, having a melting temperature of about 107 °C, preferably in a range from 106.5 to 107.5 °C, more preferably in a range from 106 to 108 °C, in a proportion of more than 40 wt.%, preferably more than 30 wt.-%, more preferably more than 20 wt.-%, more preferably more than 10 wt.-%, even more preferably more than 5 wt.-%, in each case based on the outer polymer layer. Even more preferably, the outer polymer layer is essentially free of any low density polyethylene, preferably any polyethylene in general, having a melting temperature of about 107 °C, preferably in a range from 106.5 to 107.5 °C, more preferably in a range from 106 to 108 °C.

In a preferred embodiment of the sheetlike composite 1 the carrier layer has at least one hole, wherein the at least one hole is covered at least by the outer polymer layer and the barrier layer as hole-covering layers.

In a preferred embodiment of the sheetlike composite 1 the barrier layer has an oxygen transmission rate within a range from 0.1 to 40 cm³/(m² · day · atm), preferably from 0.1 to 20 cm³/(m² · day · atm), more preferably from 0.1 to 10 cm³/(m² · day · atm), more preferably from 0.1 to 5 cm³/(m² · day · atm), more preferably from 0.1 to 3 cm³/(m² · day · atm), more preferably from 0.1 to 2 cm³/(m² · day · atm), most preferably from 0.1 to 1 cm³/(m² · day · atm).

In a preferred embodiment of the sheetlike composite 1 the barrier layer has a water vapour transmission rate within a range from 0.00001 to 40 g/(m² · day), preferably from 0.00001 to 20 g/(m² · day), more preferably from 0.00001 to 10 g/ (m² · day), more preferably from 0.00001 to 5 g/ (m² · day), more preferably from 0.00001 to 3 g/ (m² · day), more preferably from 0.00005 to 3 g/ (m² · day), most preferably from 0.0001 to 2 g/ (m² · day).

In a preferred embodiment of the sheetlike composite 1 the sheetlike composite includes an inner polymer layer, wherein the inner polymer layer superimposes the barrier layer on a side of the barrier layer which faces away from the carrier layer.

In a preferred embodiment of the sheetlike composite 1 the sheetlike composite includes an intermediate polymer layer between the carrier layer and the barrier layer.

In a preferred embodiment of the sheetlike composite 1 the sheetlike composite is a blank for production of a single closed container.

A contribution to the achievement of at least one of the objects of the invention is made by an embodiment of a process 1, comprising as process steps
a) provision of a sheetlike composite precursor, comprising a carrier layer;
b) superimposing a colour application to the carrier layer on a first side of the carrier layer;
c) superimposing an outer polymer composition to the colour application on the first side of the carrier layer via an extrusion coating method and obtaining an outer polymer layer from the outer polymer composition;
wherein the process comprises a further process step of superimposing a barrier layer to the carrier layer on a further side of the carrier layer which is opposite to the first side; wherein the outer polymer composition is characterised by a density in a range from 921 to 926 kg/m³, preferably from 922 to 926 kg/m³, more preferably from 922.5 to 925.5 kg/m³, more preferably from 923 to 925 kg/m³, even more preferably from 923.5 to 924.5 kg/m³; wherein the outer polymer composition is further characterised by a melting temperature in the range from 108.5 to 116 °C; wherein the outer polymer composition comprises at least 50 wt.-%, based on the outer polymer composition, of at least one polyolefin. In another preferred embodiment of the process 1, the outer polymer composition is characterised by a density in a range from 923 to 926 kg/m³, more preferably from 924 to 926 kg/m³. Most preferably, the outer polymer composition has a density of about 924 kg/m³. The further process step of superimposing a barrier layer may be conducted prior to process step b), between process steps b) and c) or after process step c). In an embodiment of the invention, the sheetlike composite precursor provided in process step a) comprises the barrier layer. Generally, process steps of consecutive numbering may be conducted one after the other, in temporal overlap or simultaneously.

In a preferred embodiment of the process 1 in the process step c) the outer polymer composition has a temperature in the range from 300 to 340 °C, preferably from 305 to 335 °C, more preferably from 310 to 330 °C, most preferably from 315 to 325 °C. The outer polymer composition, preferably, has the preceding temperature immediately after having been molten completely and homogenised. The outer polymer composition, preferably, has the preceding temperature directly after an extrusion tool, used for homogenising the polymer melt. In case of an extrusion screw, the temperature is measured directly after the tip of the extrusion screw. Additionally or alternatively, the outer polymer composition has the preceding temperature while being superimposed to the colour application in the process step c). In any case, the preceding temperature is measured using a calibrated thermocouple probe.

In a preferred embodiment of the process 1 in the process step c) the outer polymer composition is superimposed to the colour application via laminar extrusion coating as the extrusion coating method. Laminar extrusion coating is to be distinguished, in particular, from blown film extrusion.

In a preferred embodiment of the process 1 the outer polymer composition is further characterised by a melt flow index in the range from 2 to 6 g/10 min, preferably from 2.5 to 5.5 g/10 min, more preferably from 3 to 5 g/10 min, more preferably from 3.5 to 5 g/10 min, more preferably from 3.7 to 4.8 g/10 min, even more preferably from 3.9 to 4.5 g/10 min. In another preferred embodiment, the outer polymer composition is further characterised by a melt flow index in the range from 2 to 4.9 g/10 min, preferably 2 to 4.8 g/10 min, more preferably 2 to 4.7g/10 min, more preferably 2 to 4.6 g/10 min, more preferably 2 to 4.5 g/10 min, most preferably 3 to 4.5 g/10 min. Most preferably, the outer polymer composition has a melt flow index of about 4 g/10 min.

In a preferred embodiment of the process 1 in the process step c) the outer polymer composition is superimposed to the colour application to a basis weight within a range from 5 to 35 g/m², preferably from 5 to 30 g/m², more preferably from 5 to 25 g/m², most preferably from 10 to 25 g/m².

In a preferred embodiment of the process 1 the outer polymer composition comprises at least 60 wt.-%, preferably at least 70 wt.-%, more preferably at least 80 wt.-%, more preferably at least 90 wt.-%, even more preferably at least 95 wt.-%, in each case based on the outer polymer composition, of at least one polyolefin. Most preferably, the outer polymer composition consists of the at least one polyolefin. In a preferred embodiment, the outer polymer composition comprises exactly one polyolefin in one of the preceding proportions and optionally one or more further polyolefins.

In a preferred embodiment of the process 1 the at least one polyolefin is a polyethylene. Preferably, the polyethylene is a low density polyethylene (LDPE). Further, the polyethylene is, preferably, not an mPE.

In a preferred embodiment of the process 1 in the process step c) the outer polymer composition is applied directly onto the colour application.

In a preferred embodiment of the process 1 the process is a process of preparing a sheetlike composite.

In a preferred embodiment of the process 1 the outer polymer layer is an outermost layer of the sheetlike composite.

In a preferred embodiment of the process 1 the outer polymer composition does not include a low density polyethylene, preferably a polyethylene in general, having a melt flow index in the range from 6.5 to 7.5 g/10 min in a proportion of more than 40 wt.%, preferably more than 30 wt.-%, more preferably more than 20 wt.-%, more preferably more than 10 wt.-%, even more preferably more than 5 wt.-%, in each case based on the outer polymer layer. Even more preferably, the outer polymer composition does essentially not include a low density polyethylene, preferably a polyethylene in general, having a melt flow index of about 7 g/10 min. Most preferably, the outer polymer composition is essentially free from low density polyethylene, preferably a polyethylene in general, having a melt flow index of about 7 g/10 min.

In a further preferred embodiment, the outer polymer layer does not include a low density polyethylene or an mPE or both, preferably a polyethylene in general, having a density of 919.5 kg/m³ or less, preferably of 920 kg/m³ or less, more preferably of 920.5 kg/m³ or less, more preferably of 921 kg/m³ or less, more preferably of 921.5 kg/m³ or less, more preferably of 922 kg/m³ or less, even more preferably of 922.5 kg/m³ or less, most preferably of 923 kg/m³ or less, in each case in a proportion of more than 40 wt.%, preferably more than 30 wt.-%, more preferably more than 20 wt.-%, more preferably more than 10 wt.-%, even more preferably more than 5 wt.-%, in each case based on the outer polymer layer. Even more preferably, the outer polymer layer is essentially free of any low density polyethylene or any mPE or both, preferably any polyethylene in general, having a density of 919.5 kg/m³ or less, preferably of 920 kg/m³ or less, more preferably of 920.5 kg/m³ or less, more preferably of 921 kg/m³ or less, more preferably of 921.5 kg/m³ or less, more preferably of 922 kg/m³ or less, even more preferably of 922.5 kg/m³ or less, most preferably of 923 kg/m³ or less. Further preferably, the outer polymer layer does not include a low density polyethylene, preferably a polyethylene in general, having a density of about 920 kg/m³, preferably in a range from 918.5 to 921.5 kg/m³, in a proportion of more than 40 wt.%, preferably more than 30 wt.-%, more preferably more than 20 wt.-%, more preferably more than 10 wt.-%, even more preferably more than 5 wt.-%, in each case based on the outer polymer layer. Even more preferably, the outer polymer layer is essentially free of any low density polyethylene, preferably any polyethylene in general, having a density of about 920 kg/m³, preferably in a range from 918.5 to 921.5 kg/m³.

In a preferred embodiment of the process 1 the process further comprises a process step of introducing at least one, preferably at least two, more preferably at least three, most preferably at least four, longitudinal groove(s) to the carrier layer; wherein the at least one longitudinal groove is oriented in a first direction; wherein the carrier layer has a first bending resistance in the first direction; wherein a further direction is perpendicular to the first direction; wherein the carrier layer has a further bending resistance in the further direction; wherein the first bending resistance is less than the further bending resistance. Preferably, the first bending resistance is less than the further bending resistance by at least 10 mN, more preferably at least 20 mN, more preferably at least 30 mN, more preferably at least 40 mN, more preferably at least 50 mN, more preferably at least 60 mN, more preferably at least 70 mN, more preferably at least 80 mN, more preferably at least 90 mN, more preferably at least 100 mN, most preferably at least 150 mN. The first bending resistance is preferably in the range from 20 to 400 mN, more preferably from 20 to 300 mN, more preferably from 20 to 250 mN, more preferably from 20 to 200 mN, more preferably from 20 to 180 mN, more preferably from 20 to 160 mN, even more preferably from 40 to 160 mN, most preferably from 60 to 160 mN. Alternatively, the first bending resistance is, preferably, in the range from 20 to 150 mN, more preferably from 20 to 120 mN, most preferably from 20 to 100 mN. The further bending resistance is preferably in the range from 50 to 800 mN, more preferably from 50 to 500 mN, preferably from 60 to 450 mN, more preferably from 70 to 400 mN, more preferably from 80 to 350 mN, even more preferably from 100 to 350 mN, most preferably from 120 to 350 mN. Alternatively, the further bending resistance is, preferably, in the range from 50 to 400 mN, more preferably from 50 to 300 mN, more preferably from 50 to 200 mN, more preferably from 60 to 1800 mN, even more preferably from 70 to 170 mN, most preferably from 70 to 100 mN. Preferably, the carrier layer extends sheetlike in a plane, wherein the first direction and the further direction are both in that plane. Preferably, the first direction and the further direction are both perpendicular to a thickness of the carrier layer.

In a preferred embodiment of the process 1 in the process step a) the sheetlike composite precursor has a length which extends in the further direction. Herein, the length, the width and the thickness of an object are perpendicular to each other, wherein the object extends more in the direction of the length than in the direction of the width, whereas the object extends more in the direction of the width than in the direction of the thickness.

In a preferred embodiment of the process 1 a ratio of the further bending resistance to the first bending resistance is in the range from 1.0 to 3.5, preferably from 1.2 to 3.0, more preferably from 1.5 to 2.8, more preferably from 1.7 to 2.6, most preferably from 1.8 to 2.5.

In a preferred embodiment of the process 1 the carrier layer comprises a plurality of fibres, wherein at least 55 %, preferably at least 60 %, more preferably at least 70 %, most preferably at least 80 %, of the fibres of the plurality of fibres incline an angle of less than 30°, preferably less than 25°, more preferably less than 20°, more preferably less than 15°, most preferably less than 10°, with the further direction.

In a preferred embodiment of the process 1 the carrier layer is characterized by a basis weight within a range from 140 to 400 g/m², preferably from 150 to 350 g/m², more preferably from 160 to 330 g/m², even more preferably from 160 to 300 g/m², even more preferably from 160 to 250 g/m², most preferably from 160 to 240 g/m².

In a preferred embodiment of the process 1 the carrier layer includes, preferably consists of, one selected from the group consisting of paperboard, cardboard, and paper, or a combination of at least two thereof.

In a preferred embodiment of the process 1 the superimposing of the colour application to the carrier layer in the process step b) comprises a printing of at least one ink from which the colour application is obtained from. A preferred printing method is flexography printing. Accordingly, a flexographic ink is a preferred ink.

In a preferred embodiment of the process 1 the ink comprises at least 3 wt.-%, preferably at least 5 wt.-%, more preferably at least 7 wt.-%, more preferably at least 9 wt.-%, more preferably at least 10 wt.-%, more preferably at least 15 wt.-%, more preferably at least 20 wt.-%, more preferably at least 25 wt.-%, more preferably at least 30 wt.-%, even more preferably at least 35 wt.-%, most preferably at least 40 wt.-%, of at least one colourant, based on the weight of the at least one ink. Preferably, the ink comprises at least colourant in a proportion in a range from 3 to 70 wt.-%, more preferably from 5 to 60 wt.-%, most preferably from 7 to 55 wt.-%, based in each case on the weight of the ink.

In a preferred embodiment of the process 1 the at least one ink comprises at least 3wt.-%, preferably at least 5 wt.-%, more preferably at least 10 wt.-%, most preferably at least 15 wt.-%, of a styrene copolymer, in each case based on the weight of the ink. A preferred styrene copolymer is a styrene acrylate copolymer. The styrene copolymer, preferably, works as a binder in the ink.

In a preferred embodiment of the process 1 the at least one ink comprises at least 10 wt.-%, preferably at least 20 wt.-%, more preferably at least 25 wt.-%, of at least one solvent, in each case based on the weight of the ink. Preferably, the ink comprises at least one solvent in a proportion in a range from 10 to 80 wt.-%, more preferably from 15 to 75 wt.-%, more preferably from 20 to 70 wt.-%, most preferably from 25 to 70 wt.-%, based in each case on the weight of the ink. A preferred solvent is an organic solvent or an inorganic solvent or both. A preferred inorganic solvent is water. A preferred organic solvent is an alcohol or an acetate or both. A preferred alcohol is ethanol. A preferred acetate is ethylacetate. Preferably, the at least one solvent is a mixture of two solvents, preferably an alcohol and an acetate.

In a preferred embodiment of the process 1 the at least one ink comprises at least 5 wt.-%, preferably at least 10 wt.-%, more preferably at least 15 wt.-%, of nitrocellulose, in each case based on the weight of the ink. The nitrocellulose, preferably, works as a binder in the ink. Preferably, the at least one ink comprises 10 to 40 wt.-%, more preferably 15 to 30 wt.-%, in each case based on the weight of the ink, of nitrocellulose.

In a preferred embodiment of the process 1 the outer polymer composition is further characterised by a melting temperature in the range from 109 to 114 °C, preferably from 109 to 115 °C, more preferably from 109 to 114 °C, more preferably from 109 to 113 °C, more preferably from 110 to 113 °C, most preferably from 111 to 113 °C. In another preferred embodiment, the outer polymer composition is further characterised by a melting temperature in the range from 108.5 to 115 °C, more preferably from 108.5 to 114 °C, most preferably from 108.5 to 113 °C.

In a preferred embodiment of the process 1 the carrier layer has at least one hole, wherein in the process step c) the at least one hole is covered by the outer polymer layer as a hole-covering layer, wherein in the further process step the at least one hole is further covered by the barrier layer as a hole-covering layer.

In a preferred embodiment of the process 1 the barrier layer has an oxygen transmission rate within a range from 0.1 to 40 cm³/(m² · day · atm), preferably from 0.1 to 20 cm³/(m² · day · atm), more preferably from 0.1 to 10 cm³/(m² · day · atm), more preferably from 0.1 to 5 cm³/(m² · day · atm), more preferably from 0.1 to 3 cm³/(m² · day · atm), more preferably from 0.1 to 2 cm³/(m² · day · atm), most preferably from 0.1 to 1 cm³/(m² · day · atm).

In a preferred embodiment of the process 1 the barrier layer has a water vapour transmission rate within a range from 0.00001 to 40 g/(m² · day), preferably from 0.00001 to 20 g/(m² · day), more preferably from 0.00001 to 10 g/ (m² · day), more preferably from 0.00001 to 5 g/ (m² · day), more preferably from 0.00001 to 3 g/ (m² · day), more preferably from 0.00005 to 3 g/ (m² · day), most preferably from 0.0001 to 2 g/ (m² · day).

In a preferred embodiment of the process 1 the sheetlike composite precursor is provided in the process step a) in rolled-up form forming a roll.

In a preferred embodiment of the process 1 a sheetlike composite is obtained from the sheetlike composite precursor, wherein the process additionally includes cutting the sheetlike composite to size to give a blank for production of a single closed container.

In a preferred embodiment of the process 1 the process further comprises a process step of superimposing an inner polymer composition to the carrier layer on the further side of the carrier layer and obtaining an inner polymer layer from the inner polymer composition, wherein the inner polymer layer superimposes the barrier layer on a side of the barrier layer which faces away from the carrier layer. The process step of superimposing the inner polymer layer may be conducted prior to process step b), between process steps b) and c) or after process step c). In an embodiment of the invention, the sheetlike composite precursor provided in process step a) comprises the inner polymer layer. Preferably, the inner polymer layer is superimposed together with the barrier layer or after the barrier layer has been superimposed.

In a preferred embodiment of the process 1 further an intermediate polymer composition is superimposed to the carrier layer on the further side and an intermediate polymer layer is obtained from the intermediate polymer composition, wherein the intermediate polymer layer is disposed between the barrier layer and the carrier layer. The process step of superimposing the intermediate polymer layer may be conducted prior to process step b), between process steps b) and c) or after process step c). In an embodiment of the invention, the sheetlike composite precursor provided in process step a) comprises the intermediate polymer layer. Preferably, the intermediate polymer layer is superimposed together with the barrier layer or prior to the barrier layer being superimposed.

A contribution to the achievement of at least one of the objects of the invention is made by an embodiment of a sheetlike composite 2, obtainable by the process 1 according to any of its embodiments. In a preferred embodiment, the sheetlike composite 2 is configured in accordance with an embodiment of the sheetlike composite 1.

A contribution to the achievement of at least one of the objects of the invention is made by an embodiment of a container precursor 1, comprising at least one sheetlike region of the sheetlike composite 1 or 2 according to any of its embodiments, respectively. The sheetlike region, preferably, comprises the at least one longitudinal groove.

In a preferred embodiment of the container precursor 1 the sheetlike region comprises at least two folds, preferably at least 3 folds, more preferably at least 4 folds.

In a preferred embodiment of the container precursor 1 the sheetlike region comprises at least one, preferably at least two, more preferably at least three, most preferably at least four, longitudinal fold(s). Preferably, each of the longitudinal folds is oriented in the first direction.

In a preferred embodiment of the container precursor 1 the sheetlike region comprises a first longitudinal rim and a further longitudinal rim, wherein the first longitudinal rim is joined to the further longitudinal rim, forming a longitudinal seam of the container precursor. Preferably, the longitudinal seam is oriented in the first direction.

A contribution to the achievement of at least one of the objects of the invention is made by an embodiment of a, preferably closed, container, comprising at least one sheetlike region of the sheetlike composite 1 or 2 according to any of its embodiments, respectively. The sheetlike region, preferably, comprises the at least one longitudinal groove.

In a preferred embodiment of the container the sheetlike region comprises at least two folds, preferably at least 3 folds, more preferably at least 4 folds.

In a preferred embodiment of the container the sheetlike region comprises at least one, preferably at least two, more preferably at least three, most preferably at least four, longitudinal fold(s). Preferably, each of the longitudinal folds is oriented in the first direction.

In a preferred embodiment of the container the sheetlike region comprises a first longitudinal rim and a further longitudinal rim, wherein the first longitudinal rim is joined to the further longitudinal rim, forming a longitudinal seam of the container. Preferably, the longitudinal seam is oriented in the first direction. Further preferable, the longitudinal seam is oriented in a direction of a height of the container.

In a preferred embodiment of the container the container comprises a foodstuff.

A contribution to the achievement of at least one of the objects of the invention is made by an embodiment of a process 2, comprising as process steps:
a. providing at least one sheetlike region of the sheetlike composite 1 or 2 according to any of its embodiments, respectively, this at least one sheetlike region including a first longitudinal rim and a further longitudinal rim;
b. folding the at least one sheetlike region; and
c. contacting and joining the first longitudinal rim to the further longitudinal rim, thereby obtaining a longitudinal seam.

The sheetlike region, preferably, comprises the at least one longitudinal groove.

A contribution to the achievement of at least one of the objects of the invention is made by an embodiment of a container precursor 2, obtainable by the process 2 according to any of its embodiments.

A contribution to the achievement of at least one of the objects of the invention is made by an embodiment of a process 3, comprising as process steps
a] providing the container precursor 1 or 2 according to any of its embodiments, respectively;
b] forming a base region of a container by folding the sheetlike region;
c] closing the base region by joining faces of the sheetlike region to each other;
d] filling the container precursor with a foodstuff;
e] forming a top region of the container by folding the sheetlike region; and
f] closing the top region by joining faces of the sheetlike region to each other, thereby obtaining a closed container.

In a preferred embodiment of the process 3 the joining in the process step c] or f] or both is effected as a sealing.

In a preferred embodiment of the process 3 the sealing is an ultrasonic sealing
In a preferred embodiment of the process 3 the joining in the process step c] or fJ or both comprises contacting the outer polymer layer of the sheetlike region with at least one closing tool. A preferred closing tool is a sealing tool. A preferred sealing tool is a sonotrode or an anvil or both.

In a preferred embodiment of the process 3 the process is a process for preparing the closed container.

In a preferred embodiment of the process 3 the process further comprises a method step of
g] joining an opening aid to the closed container.

A contribution to the achievement of at least one of the objects of the invention is made by an embodiment of a closed container, obtainable by the process 3 according to any of its embodiments. In a preferred embodiment, the closed container is configured in accordance with an embodiment of the container of the invention.

In a preferred embodiment of the closed container the closed container has at least 4, preferably at least 7, more preferably at least 12, edges.

A contribution to the achievement of at least one of the objects of the invention is made by an embodiment of a use 1 of the sheetlike composite 1 or 2 according to any of its embodiments, respectively, for preparing a foodstuff container. Preparing the foodstuff container, preferably, comprises one or more steps of process 3 according to any of its embodiments.

In a preferred embodiment of the use 1 the preparing comprises a sealing of faces of the sheetlike composite to each other.

In a preferred embodiment of the use 1 the sealing is an ultrasonic sealing.

A contribution to the achievement of at least one of the objects of the invention is made by an embodiment of a use 2 of a polyolefin having a density in a range from 921 to 926 kg/m³, preferably from 922 to 926 kg/m³, more preferably from 922.5 to 925.5 kg/m³, more preferably from 923 to 925 kg/m³, even more preferably from 923.5 to 924.5 kg/m³, in an outer polymer layer of a sheetlike composite, comprising as a layer sequence in a direction from an outer surface of the sheetlike composite to an inner surface of the sheetlike composite
a) the outer polymer layer,
b) a colour application,
c) a carrier layer, and
d) a barrier layer.

In another preferred embodiment of the use 2, the polyolefin is characterised by a density in a range from 923 to 926 kg/m³, more preferably from 924 to 926 kg/m³. Most preferably, the polyolefin has a density of about 924 kg/m³; wherein the polyolefin is further characterised by a melting temperature in the range from 108.5 to 116 °C; wherein the polyolefin makes up the outer polymer layer to at least 50 wt.-%, based on the outer polymer layer; wherein the outer polymer layer is obtained by superimposing an outer polymer composition to the colour application via an extrusion coating method. In a preferred embodiment of the use 2, the sheetlike composite is configured in accordance with any of the embodiments of the sheetlike composite 1 or 2 of the invention.

In a preferred embodiment of the use 2 the polyolefin makes up the outer polymer layer to at least 60 wt.-%, preferably at least 70 wt.-%, more preferably at least 80 wt.-%, more preferably at least 90 wt.-%, even more preferably at least 95 wt.-%, in each case based on the outer polymer layer.

In a preferred embodiment of the use 2 the polyolefin is further characterised by a melt flow index in the range from 2 to 6 g/10 min, preferably from 2.5 to 5.5 g/10 min, more preferably from 3 to 5 g/10 min, more preferably from 3.5 to 5 g/10 min, more preferably from 3.7 to 4.8 g/10 min, even more preferably from 3.9 to 4.5 g/10 min. In another preferred embodiment, the polyolefin is further characterised by a melt flow index in the range from 2 to 4.9 g/10 min, preferably 2 to 4.8 g/10 min, more preferably 2 to 4.7g/10 min, more preferably 2 to 4.6 g/10 min, more preferably 2 to 4.5 g/10 min, most preferably 3 to 4.5 g/10 min. Most preferably, the polyolefin has a melt flow index of about 4 g/10 min.

In a preferred embodiment of the use 2 the polyolefin is a polyethylene. Preferably, the polyethylene is a low density polyethylene (LDPE). Further, the polyethylene is, preferably, not an mPE.

In a preferred embodiment of the use 2 the polyolefin is characterised by a melting temperature in the range from 109 to 114 °C, preferably from 109 to 115 °C, more preferably from 109 to 114 °C, more preferably from 109 to 113 °C, more preferably from 110 to 113 °C, most preferably from 111 to 113 °C. In another preferred embodiment, the polyolefin is further characterised by a melting temperature in the range from 108.5 to 115 °C, more preferably from 108.5 to 114 °C, most preferably from 108.5 to 113 °C.

Features which are described to be preferred in the context of a category of the invention, for example according to the sheetlike composite 1 or the process 1, are as well preferred in further embodiments of the further categories of the invention, for example of the process 1 or the use 2.

### Layers of the sheetlike composite

The layers of the layer sequence have been joined to one another. Two layers have been joined to one another when their adhesion to one another extends beyond van der Waals attraction forces. Layers that have been joined to one another preferably belong to a category selected from the group consisting of sealed to one another, adhesively bonded to one another and compressed to one another, or a combination of at least two of these. Unless stated otherwise, in a layer sequence, the layers may follow one another indirectly, i.e. with one or at least two intermediate layers, or directly, i.e. with no intermediate layer. This is the case especially in the form of words in which one layer overlays another layer. A form of words in which a layer sequence comprises enumerated layers means that at least the layers specified are present in the sequence specified. This form of words does not necessarily mean that these layers follow on directly from one another. A form of words in which two layers adjoin one another means that these two layers follow on from one another directly and hence with no intermediate layer. However, this form of words does not specify whether or not the two layers have been joined to one another. Instead, these two layers may be in contact with one another. Preferably, however, these two layers are joined to one another.

### Colour application

Generally, a colour application is a solid material on a surface, wherein the solid material comprises at least one colourant. Therein, the colour application may be continuous or dis-continuous. If the colour application is discontinuous, it preferably has a surface coverage of less than 100 %. A preferred discontinuous colour application consists of printing dots. According to DIN 55943:2001-10, colourant is the collective term for all colouring substances, especially for dyes and pigments. A preferred colourant is a pigment. A preferred pigment is an inorganic pigment or an organic pigment or both, wherein the organic pigment is particularly preferred. Pigments that are notable in connection with the invention are especially the pigments mentioned in DIN 55943:2001-10 and those mentioned in "Industrial Organic Pigments, Third Edition" (Willy Herbst, Klaus Hunger Copyright © 2004 WILEY-VCH Verlag GmbH & Co. KGaA, Weinheim ISBN: 3-527-30576-9). However, other pigments may be considered as well. For example, the following are further notable suitable pigments:
i. red or magenta pigments: pigment red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, pigment violet 3, 19, 23, 29, 30, 37, 50 and 88;
ii. blue or cyan pigments: pigment blue 1, 15, 15:1, 15:2, 15:3, 15:4, 15:6, 16, 17-1, 22, 27, 28, 29, 36 and 60;
iii. green pigments: pigment green 7, 26, 36 and 50;
iv. yellow pigments: pigment yellow 1, 3, 12, 13, 14, 17, 34, 35, 37, 55, 74, 81, 83, 93, 94, 95, 97, 108, 109, 110, 128, 137, 138, 139, 153, 154, 155, 157, 166, 167, 168, 177, 180, 185 and 193 and
v. white pigments: pigment white 6, 18 and 21.

The colour application preferably comprises at least 2 colourants, more preferably at least 3 colourants, more preferably at least 4 colourants, even more preferably at least 5, most preferably at least 6 colourants, of different colour. In a preferred embodiment, the colour application comprises exactly 4 colourants or exactly 6 colourants of different colour. A preferred colour application is a, preferably printed, decoration or comprises a plurality of, preferably printed, decorations, preferably a plurality of identical decorations. A preferred decoration is a decoration of a container, preferably a foodstuff container, to be produced from the sheetlike composite. A preferred decoration comprises information for identification and/or promotion of a foodstuff, preferably the foodstuff to be stored in a container, to be produced from the sheetlike composite. Further, the colour application is, preferably, obtainable from one or more inks, most preferably via printing of the one or more inks.

Each preferred colour application may further comprise one selected from the group consisting of an antimicrobial agent, a further binder, an anti foaming agent, a stiffening agent, a wax, a rheology agent, and a pH-adjustment agent, or a combination of at least two thereof.

### Polymer layers

The term "polymer layer" refers hereinafter especially to the inner polymer layer, the intermediate polymer layer and the outer polymer layer. A preferred polymer is a polyolefin. The polymer layers may have further constituents. The polymer layers are preferably introduced into or applied to the sheetlike composite material in an extrusion method. The further constituents of the polymer layers are preferably constituents that do not adversely affect the behaviour of the polymer melt on application as a layer. The further constituents may, for example, be inorganic compounds, such as metal salts, or further polymers, such as further thermoplastics. However, it is also conceivable that the further constituents are fillers or pigments, for example carbon black or metal oxides. Suitable thermoplastics for the further constituents especially include those that are readily processible by virtue of good extrusion characteristics. Among these, polymers obtained by chain polymerization are suitable, especially polyesters or polyolefins, particular preference being given to cyclic olefin copolymers (COCs), polycyclic olefin copolymers (POCs), especially polyethylene and polypropylene, and very particular preference to polyethylene. Among the polyethylenes, preference is given to HDPE (*high density polyethylene*), MDPE (*medium density polyethylene*), LDPE (*low density polyethylene*), LLDPE (*linear low density polyethylene*) and VLDPE (*very low density polyethylene*) and mixtures of at least two of these. It is also possible to use mixtures of at least two thermoplastics. Suitable polymer layers have a melt flow rate (MFR) within a range from 1 to 25 g/10 min, preferably within a range from 2 to 20 g/10 min and more preferably within a range from 2.5 to 15 g/10 min, and a density within a range from 0.890 g/cm³ to 0.980 g/cm³, preferably within a range from 0.895 g/cm³ to 0.975 g/cm³, and further preferably within a range from 0.900 g/cm³ to 0.970 g/cm³. The polymer layers preferably have at least one melting temperature within a range from 80 to 155°C, preferably within a range from 90 to 145°C and more preferably within a range from 95 to 135°C.

### Outer polymer layer

The outer polymer layer preferably comprises a polyethylene or a polypropylene or both. Preferred polyethylenes here are LDPE and HDPE and mixtures of these. A preferred outer polymer layer comprises an LDPE to an extent of at least 50% by weight, preferably to an extent of at least 60% by weight, more preferably to an extent of at least 70% by weight, still more preferably to an extent of at least 80% by weight, most preferably to an extent of at least 90% by weight, based in each case on the weight of the outer polymer layer.

### Intermediate polymer layer

The intermediate polymer layer preferably adjoins the first adhesion promoter layer. The intermediate polymer layer preferably has a thickness within a range from 10 to 30 µm, more preferably of 12 to 28 µm. The intermediate polymer layer preferably comprises a polyethylene or a polypropylene or both. In this context, a particularly preferred polyethylene is an LDPE. Preferably, the intermediate polymer layer includes the polyethylene or the polypropylene or both together in a proportion of at least 20% by weight, more preferably at least 30% by weight, more preferably at least 40% by weight, more preferably at least 50% by weight, more preferably at least 60% by weight, more preferably at least 70% by weight, more preferably at least 80% by weight, most preferably at least 90% by weight, based in each case on the total weight of the intermediate polymer layer. Additionally or alternatively, the intermediate polymer layer preferably includes an HDPE, preferably in a proportion of at least 10% by weight, more preferably at least 20% by weight, more preferably at least 30% by weight, more preferably at least 40% by weight, more preferably at least 50% by weight, more preferably at least 60% by weight, more preferably at least 70% by weight, more preferably at least 80% by weight, most preferably at least 90% by weight, based in each case on the total weight of the intermediate polymer layer. In this context, the intermediate polymer layer includes the aforementioned polymers preferably in a polymer blend.

### Inner polymer layer

The inner polymer layer is based on thermoplastic polymers, where the inner polymer layer may include a particulate inorganic solid. However, it is preferable that the inner polymer layer comprises one or more thermoplastic polymers to an extent of at least 70% by weight, preferably at least 80% by weight and more preferably at least 95% by weight, based in each case on the total weight of the inner polymer layer. Preferably, the polymer or polymer mixture of the inner polymer layer has a density (according to ISO 1183-1:2004) within a range from 0.900 to 0.980 g/cm³, more preferably within a range from 0.900 to 0.960 g/cm³ and most preferably within a range from 0.900 to 0.940 g/cm³. The polymer is preferably a polyolefin, mPolymer or a combination of the two. The inner polymer layer preferably comprises a polyethylene or a polypropylene or both. In this context, a particularly preferred polyethylene is an LDPE. Preferably, the inner polymer layer includes the polyethylene or the polypropylene or both together in a proportion of at least 30% by weight, more preferably at least 40% by weight, most preferably at least 50% by weight, based in each case on the total weight of the inner polymer layer. Additionally or alternatively, the inner polymer layer preferably includes an HDPE, preferably in a proportional at least 5% by weight, more preferably at least 10% by weight, more preferably at least 15% by weight, most preferably at least 20% by weight, based in each case on the total weight of the inner polymer layer. Additionally or alternatively to one or more of the aforementioned polymers, the inner polymer layer preferably includes a polymer prepared by means of a metallocene catalyst, preferably an mPE. Preferably, the inner polymer layer includes the mPE in a proportion of at least 3% by weight, more preferably at least 5% by weight, based in each case on the total weight of the inner polymer layer. In this case, the inner polymer layer may include 2 or more, preferably 2 or 3, of the aforementioned polymers in a polymer blend, for example at least a portion of the LDPE and the mPE, or at least a portion of the LDPE and the HDPE. In addition, the inner polymer layer may include 2 or more, preferably 3, mutually superposed sublayers which preferably form the inner polymer layer. The sublayers are preferably layers obtained by coextrusion. Preferably, an adhesion promoter layer is disposed on a side of the inner polymer layer which faces the barrier layer. This adhesion promoter layer, preferably, adjoins the inner polymer.

In a preferred configuration of the sheetlike composite, the inner polymer layer includes, in a direction from the outer face of the sheetlike composite to the inner face of the sheetlike composite, a first sublayer including an LDPE in a proportion of at least 50% by weight, preferably of at least 60% by weight, more preferably of at least 70% by weight, even more preferably of at least 80% by weight, most preferably of at least 90% by weight, based in each case on the weight of the first sublayer, and a further sublayer including a blend, wherein the blend includes an LDPE in a proportion of at least 30% by weight, preferably of at least 40% by weight, more preferably of at least 50% by weight, even more preferably of at least 60% by weight, most preferably of at least 65% by weight, and an mPE in a proportion of at least 10% by weight, preferably of at least 15% by weight, more preferably of at least 20% by weight, most preferably of at least 25% by weight, based in each case on the weight of the blend. In this case, the further sublayer includes the blend preferably in a proportion of at least 50% by weight, preferably of at least 60% by weight, more preferably of at least 70% by weight, even more preferably of at least 80% by weight, most preferably of at least 90% by weight, based in each case on the weight of the further sublayer. More preferably, the further sublayer consists of the blend.

In a further preferred configuration of the sheetlike composite, the inner polymer layer includes, in a direction from the outer face of the sheetlike composite to the inner face of the sheetlike composite, a first sublayer including an HDPE in a proportion of at least 30% by weight, preferably of at least 40% by weight, more preferably of at least 50% by weight, even more preferably of at least 60% by weight, most preferably of at least 70% by weight, and an LDPE in a proportion of at least 10% by weight, preferably of at least 15% by weight, more preferably of at least 20% by weight, based in each case on the weight of the first sublayer; a second sublayer including an LDPE in a proportion of at least 50% by weight, preferably of at least 60% by weight, more preferably of at least 70% by weight, even more preferably of at least 80% by weight, most preferably of at least 90% by weight, based in each case on the weight of the second sublayer; and a third sublayer including a blend, wherein the blend includes an LDPE in a proportion of at least 30% by weight, preferably of at least 40% by weight, more preferably of at least 50% by weight, even more preferably of at least 60% by weight, most preferably of at least 65% by weight, and an mPE in a proportion of at least 10% by weight, preferably of at least 15% by weight, more preferably of at least 20% by weight, most preferably of at least 25% by weight, based in each case on the weight of the blend. In this case, the third sublayer includes the blend preferably in a proportion of at least 50% by weight, preferably of at least 60% by weight, more preferably of at least 70% by weight, even more preferably of at least 80% by weight, most preferably of at least 90% by weight, based in each case on the weight of the third sublayer. More preferably, the third sublayer consists of the blend.

### mPolymer

An mPolymer is a polymer which has been prepared by means of a metallocene catalyst. A metallocene is an organometallic compound in which a central metal atom is arranged between two organic ligands, for example cyclopentadienyl ligands. A preferred mPolymer is an mPolyolefin, preferably an mPolyethylene or an mPolypropylene or both. A preferred mPolyethylene is one selected from the group consisting of an mLDPE, an mLLDPE, and an mH-DPE, or a combination of at least two of these.

### Carrier layer

The carrier layer used may be any material which is suitable for a person skilled in the art for this purpose and which has sufficient strength and stiffness to impart stability to the container to such an extent that the container in the filled state essentially retains its shape. This is, in particular, a necessary feature of the carrier layer since the invention relates to the technical field of dimensionally stable containers. Dimensionally stable containers of this kind should in principle be distinguished from pouches and bags, which are usually produced from thin films. As well as a number of plastics, preference is given to plant-based fibrous materials, especially pulps, preferably limed, bleached and/or unbleached pulps, with paper and cardboard being especially preferred. Accordingly, a preferred carrier layer comprises a multitude of fibres. The basis weight of the carrier layer is preferably within a range from 120 to 450 g/m², especially preferably within a range from 130 to 400 g/m² and most preferably within a range from 150 to 380 g/m². A preferred cardboard generally has a single-layer or multilayer structure and may have been coated on one or both sides with one or else more than one cover layer. In addition, a preferred cardboard has a residual moisture content of less than 20% by weight, preferably of 2% to 15% by weight and especially preferably of 4% to 10% by weight, based on the total weight of the cardboard. An especially preferred cardboard has a multilayer structure. Further preferably, the cardboard has, on the surface facing the environment, at least one lamina, but more preferably at least two laminas, of a cover layer known to the person skilled in the art as a "coating slip". In addition, a preferred cardboard has a Scott bond value (according to Tappi T403um) within a range from 100 to 360 J/m², preferably from 120 to 350 J/m² and especially preferably from 135 to 310 J/m². By virtue of the aforementioned ranges, it is possible to provide a composite from which it is possible to fold a container with high integrity, easily and in low tolerances.

### Barrier layer

Material used as barrier layer can be any material which is known for this purpose to the person skilled in the art and which exhibits adequate barrier action in particular in relation to oxygen. It is preferable that the barrier layer is selected from
a. a plastics barrier layer;
b. a metal layer;
c. a metal oxide layer; or
d. a combination of at least two of a. to c.

It is preferable that the barrier layer is of one-piece design.

If, according to alternative a., a barrier layer is a plastics barrier layer, this preferably includes at least 70% by weight, particularly at least 80% by weight and most preferably at least 95% by weight, of at least one plastic which is known for this purpose to the person skilled in the art, in particular on account of aroma properties or, respectively, gas-barrier properties that are suitable for packaging containers. Plastics, in particular thermoplastics, that can be used here are N- or O-containing plastics, either as such or else in mixtures of two or more. A melting point of the plastics barrier layer in the range from more than 155 to 300°C, preferably in the range from 160 to 280°C and particularly preferably in the range from 170 to 270°C can prove advantageous according to the invention. A preferred electrically insulating barrier layer is a plastics barrier layer.

It is further preferable that the weight per unit area of the plastics barrier layer is in the range from 2 to 120 g/m², preferably in the range from 3 to 60 g/m², particularly preferably in the range from 4 to 40 g/m² and with further preference from 6 to 30g/m². It is further preferable that the plastics barrier layer can be obtained from melts, for example via extrusion, in particular layer extrusion. It is further preferable that the plastics barrier layer can be introduced into the sheetlike composite by way of lamination. Preference is given here to incorporation of a foil into the sheetlike composite. According to another embodiment it is also possible to select plastics barrier layers which can be obtained via deposition from a solution or dispersion of plastics.

Suitable polymers are preferably those whose weight-average molar mass, determined by gel permeation chromatography (GPC) using light scattering, is in the range from 3·10³ to 1·10⁷ g/mol, preferably in the range from 5·10³ to 1·10⁶ g/mol and particularly preferably in the range from 6·10³ to 1·10⁵ g/mol. Suitable polymers that in particular can be used are polyamide (PA) or polyethylene vinyl alcohol (EVOH) or a mixture thereof.

Among the polyamides, it is possible to use any of the PAs that appear to a person skilled in the art to be suitable for the inventive use. Particular mention should be made here of PA 6, PA 6.6, PA 6.10, PA 6.12, PA 11 or PA 12 or a mixture of at least two thereof, particular preference being given here to PA 6 and PA 6.6, and further preference being given here to PA 6. PA 6 is obtainable commercially by way of example with the trademark Akulon^{®}, Durethan^{®} and Ultramid^{®}. Other suitable materials are amorphous polyamides such as MXD6, Grivory^{®}, and also Selar^{®} PA. It is further preferable that the density of the PA is in the range from 1.01 to 1.40 g/cm³, preferably in the range from 1.05 to 1.30 g/cm³ and particularly preferably in the range from 1.08 to 1.25 g/cm³. It is further preferable that the viscosity number of the PA is in the range from 130 to 185 ml/g and preferably in the range from 140 to 180 ml/g.

EVOH that can be used is any of the EVOHs that appear to the person skilled in the art to be suitable for the inventive use. Examples here are obtainable commercially inter alia with the trademark EVAL^{™} from EVAL Europe NV, Belgium in a plurality of different embodiments, examples being the grades EVAL^{™} F104B and EVAL^{™} LR171B. Preferred EVOHs have at least one, two, a plurality of, or all of, the following properties:
- ethylene content in a range from 20 to 60 mol%, preferably from 25 to 45 mol%;
- density in the range from 1.0 to 1.4 g/cm³, preferably from 1.1 to 1.3 g/cm³;
- melting point in the range from above 155 to 235°C, preferably from 165 to 225°C;
- MFR (210°C/2.16 kg if T_{M(EVOH)}<210°C; 230°C/2.16 kg, if 210°C≤T_{M(EVOH)}<230°C) in the range from 1 to 25 g/10 min, preferably from 2 to 20 g/10 min;
- oxygen transmission rate in the range from 0.05 to 3.2 cm³·20 µm/m²·day·atm, preferably in the range from 0.1 to 1 cm³·20 µm/m²·day·atm.

According to alternative b. the barrier layer is a metal layer. A suitable metal layer is in principle any of the layers using metals which are known to the person skilled in the art and which can provide high impermeability to light and to oxygen. According to a preferred embodiment the metal layer can take the form of a film or of a deposited layer, e.g. after a physical gas-phase deposition process. It is preferable that the metal layer is an uninterrupted layer. According to another preferred embodiment, the thickness of the metal layer is in the range from 3 to 20 µm, preferably in the range from 3.5 to 12 µm and particularly preferably in the range from 4 to 10 µm.

Metals preferably selected are aluminium, iron or copper. A preferred iron layer can be a steel layer, e.g. in the form of a foil. It is further preferable that the metal layer is a layer using aluminium. The aluminium layer can advantageously consist of an aluminium alloy, for example AlFeMn, AlFe1.5Mn, AlFeSi or AlFeSiMn. Purity is usually 97.5% or higher, preferably 98.5% or higher, based in each case on the entire aluminium layer. In a particular embodiment the metal layer consists of an aluminium foil. The extensibility of suitable aluminium foils is more than 1%, preferably more than 1.3% and particularly preferably more than 1.5%, and their tensile strength is more than 30 N/mm², preferably more than 40 N/mm² and particularly preferably more than 50 N/mm². Suitable aluminium foils exhibit a droplet size of more than 3 mm in the pipette test, preferably more than 4 mm and particularly preferably more than 5 mm. Suitable alloys for the production of aluminium layers or aluminium foils are obtainable commercially as EN AW 1200, EN AW 8079 or EN AW 8111 from Hydro Aluminium Deutschland GmbH or Amcor Flexibles Singen GmbH. A preferred electrically conductive barrier layer is a metal barrier layer, particularly preferably an aluminium barrier layer.

When a metal foil is used as barrier layer, there can be an adhesion-promoter layer provided on one or both sides of the metal foil between the metal foil and the closest polymer layer.

According to a particular embodiment of the container of the invention, however, there is no adhesion-promoter layer provided on any side of the metal foil between the metal foil and the closest polymer layer.

It is further preferable to select a metal oxide layer as barrier layer according to alternative c. Metal oxide layers that can be used are any of the metal oxide layers that are familiar to the person skilled in the art and that appear suitable for achieving a barrier effect in relation to light, water vapour and/or gas. In particular, preference is given to metal oxide layers based on the abovementioned metals aluminium, iron or copper and also to metal oxide layers based on compounds of titanium or silicon oxide. A metal oxide layer is produced by way of example via deposition of a metal oxide from a vapour onto a plastics layer, for example an oriented polypropylene film. A preferred process for this is physical gas-phase deposition.

According to another preferred embodiment the metal layer or the metal oxide layer can take the form of a layer composite made of one or more plastics layers with a metal layer. This type of layer can be obtained by way of example via vapour deposition of a metal onto a plastics layer, for example an oriented polypropylene film. A preferred process for this is physical gas-phase deposition.

### Adhesion, adhesion-promoter layer

There can be an adhesion-promoter layer located between layers of the sheetlike composite which do not adjoin each other. In particular, there can be an adhesion-promoter layer located between the barrier layer and the inner polymer layer or the carrier layer and the barrier layer. Plastics which can be used as adhesion promoters in an adhesion-promoter layer are any of those which, by virtue of functionalisation by means of suitable functional groups, are suitable to produce a secure bond via formation of ionic bonds or covalent bonds to a surface of a respective adjacent layer. The materials are preferably functionalised polyolefins obtained via copolymerisation of ethylene with acrylic acids such as acrylic acid or methacrylic acid, crotonic acid, acrylates, acrylate derivatives or carboxylic anhydrides containing double bonds, for example maleic anhydride, or at least two thereof. Among these, preference is given to polyethylene-maleic anhydride graft polymers (EMAH), ethylene-acrylic acid copolymers (EAA) or ethylene-methacrylic acid copolymers (EMAA), which are marketed by way of example with the trademarks Bynel^{®} and Nucrel^{®}0609HSA by DuPont or Escor^{®}6000ExCo by ExxonMobil Chemicals.

According to the invention it is preferable that the adhesion between a carrier layer, a polymer layer or a barrier layer and the respective closest layer is at least 0.5 N/15 mm, preferably at least 0.7 N/15 mm and particularly preferably at least 0.8 N/15 mm. In an embodiment of the invention it is preferable that the adhesion between a polymer layer and a carrier layer is at least 0.3 N/15 mm, preferably at least 0.5 N/15 mm and particularly preferably at least 0.7 N/15 mm. It is further preferable that the adhesion between a barrier layer and a polymer layer is at least 0.8 N/15 mm, preferably at least 1.0 N/15 mm and particularly preferably at least 1.4 N/15 mm. In the event that a barrier layer follows a polymer layer indirectly by way of an adhesion-promoter layer it is preferable that the adhesion between the barrier layer and the adhesion-promoter layer is at least 1.8 N/15 mm, preferably at least 2.2 N/15 mm and particularly preferably at least 2.8 N/15 mm. In a particular embodiment the adhesion between the individual layers is so strong that the adhesion test leads to tearing of a carrier layer, the term used in the event of paperboard or cardboard as carrier layer being paperboard or cardboard fibre tear.

### Longitudinal grooves, longitudinal folds, longitudinal edges

A longitudinal groove is a linear groove which is oriented in a longitudinal direction. Therein, the longitudinal direction is perpendicular to a transverse direction. Preferably, the first direction is the longitudinal direction. Further preferably, the further direction is the transverse direction. For a closed container standing upright on its base, the longitudinal direction is preferably vertical. Hence, for this closed container standing upright on its base the transverse direction is preferably horizontal. Further, the longitudinal direction is preferably a direction of a height of a container precursor or closed container to be produced from the sheetlike composite according to the invention. Further preferably, the transverse direction is a direction of a circumference of a jacket surface of the container precursor or the closed container. This holds in particular if the closed container is of a cuboid shape.

A sheetlike composite according to the invention preferably comprises a first transversal rim and a further transversal rim, wherein the first transversal rim is positioned at an opposite end across the outer surface or the inner surface or both of the sheetlike composite with respect to the further transversal rim. Further, the sheetlike composite preferably comprises a first longitudinal rim and a further longitudinal rim, wherein the first longitudinal rim is positioned at an opposite end across the outer surface or the inner surface or both of the sheetlike composite with respect to the further longitudinal rim. In a sheetlike composite having a rectangular outer surface or inner surface or both, the first and the further longitudinal rims are perpendicular to the first and the further transversal rims. In a preferred container precursor, comprising the sheetlike composite the first and the further longitudinal rims are joined to one another, thereby forming a longitudinal seam. The longitudinal groove preferably extends between the first and the further transversal rims. More preferably, the longitudinal grooves connect the first and the further longitudinal rim with each other across the outer surface or the inner surface or both of the sheetlike composite. The first transversal rim of the sheetlike composite is preferably configured to at least partly form a top region of the container precursor or the closed container to be produced from the sheetlike composite. The further transversal rim of the sheetlike composite is preferably configured to at least partly form a bottom or base region of the container precursor or the closed container to be produced from the sheetlike composite.

By folding along the longitudinal groove a longitudinal fold is obtainable. In a preferred container precursor according to the invention, the longitudinal fold extends from a top to a bottom region of the container precursor. The container precursor is preferably open in both the top and the bottom region. Preferably, the longitudinal fold is oriented in parallel to the longitudinal seam of the container precursor. A length of the longitudinal fold of the container precursor is preferably equal to a height of this container precursor. This holds in particular if the container precursor is designed for the production of a closed container of cuboid shape. Further, a length of the longitudinal fold of the container precursor is preferably equal to a height of the container precursor. Preferably, a section of the longitudinal fold of the container precursor forms a longitudinal edge of the closed container obtainable from the container precursor. Further sections of the longitudinal fold are processed in the top and bottom regions of the closed container respectively in the production of the closed container from the container precursor. A length of the longitudinal edge is preferably equal to a height of the closed container. This holds in particular for a closed container of cuboid shape. However, containers of other shapes are feasible in accordance with the invention as well. For example, the closed container may comprise a gable-shaped top region, which contributes to the height of the container, but the longitudinal fold does not extend into this top region. Preferably, a closed container according to the invention comprises a jacket surface of wall segments. In a cuboid container these wall segments are 4 rectangular segments. Preferably, at a longitudinal edge of the container, two neighbouring wall segments of the jacket surface meet each other.

In a preferred sheetlike composite according to the invention, the carrier layer has a transverse fibre. The term transverse fibre is known to the person skilled in the art of paper-, cardboardor paperboard-making as the opposite of a longitudinal fibre. Further, in a preferred container precursor according to the invention, the carrier layer has a transverse fibre. Further, in a preferred closed container according to the invention, the carrier layer has a transverse fibre.

### Outer surface

The outer surface of the sheetlike composite is a surface of the sheetlike composite which is intended to be in contact with the environment of the container to be produced from the sheetlike composite. This does not mean that, in individual regions of the container, outer surfaces of various regions of the composite are not folded against one another or joined to one another, for example sealed to one another.

### Inner surface

The inner surface of the sheetlike composite is a surface of the sheetlike composite which is intended to be in contact with the contents of the container, preferably a foodstuff, in a container to be produced from the sheetlike composite.

### Extrusion

In the extrusion, the polymers are typically heated to temperatures of 210 to 350°C, measured at the molten polymer film beneath the exit from the extruder die. The extrusion can be effected by means of extrusion tools which are known to those skilled in the art and are commercially available, for example extruders, extruder screws, feed blocks, etc. At the end of the extruder, there is preferably an opening through which the polymer melt is pressed. The opening may have any shape that allows extrusion of the polymer melt. For example, the opening may be angular, oval or round. The opening is preferably in the form of a slot of a funnel. Once the melt layer has been applied to the substrate layer by means of the above-described method, the melt layer is left to cool down for the purpose of heat-setting, this cooling preferably being effected by quenching via contact with a surface which is kept at a temperature within a range from 5 to 50°C, especially preferably within a range from 10 to 30°C. Subsequently, at least the flanks are separated off from the surface. The separation may be carried out in any way that is familiar and appears suitable to a person skilled in the art for separating the flanks quickly, as precisely as possible and cleanly. Preferably, the separation is effected by means of a knife, laser beam or waterjet, or a combination of two or more thereof, the use of knives being especially preferable, especially a circular knife.

### Folding of the sheetlike composite

The folding of the sheetlike composite is preferably performed in a temperature range from 10 to 50°C, preferably in a range from 15 to 45°C and especially preferably in a range from 20 to 40°C. This can be achieved by the sheetlike composite being at a temperature in the aforementioned ranges. It is also preferred that a folding tool, preferably together with the sheetlike composite, is at a temperature in the aforementioned range. For this purpose, the folding tool preferably does not have a heating means. Rather, the folding tool or else the sheetlike composite or both may be cooled. It is also preferred that the folding is performed at a temperature of at most 50°C, as "cold folding", and the joining takes place at above 50°C, preferably above 80°C and especially preferably above 120°C, as "hot sealing". The aforementioned conditions, and especially temperatures, preferably also apply in the environment of the folding, for example in the housing of the folding tool.

"Folding" is understood here as meaning, according to the invention, an operation in which an elongated crease, forming an angle, is made in the folded sheetlike composite, preferably by means of a folding edge of a folding tool. For this purpose, often two adjoining faces of a sheetlike composite are bent increasingly towards one another. The folding produces at least two adjoining fold faces that can then be joined at least in sub-regions to form a container region. According to the invention, the joining can be performed by any measure which appears suitable to the person skilled in the art and which allows for a join that is as gas- and liquidtight as possible. The joining can be performed by sealing or adhesive bonding or a combination of the two measures. In the case of sealing, the join is created by means of a liquid and the solidification thereof. In the case of adhesive bonding, chemical bonds form between the interfaces or surfaces of the two articles to be joined and create the join. It is often advantageous in the case of sealing or adhesive bonding to press together the faces that are to be sealed or adhesively bonded.

### Joining

A useful joining method is any joining method that seems suitable to the person skilled in the art for use of the invention, by means of which a sufficiently firm join can be obtained. A preferred joining method is any selected from the group consisting of sealing, adhesive bonding and pressing, or a combination of at least two of these. In the case of sealing, the join is created by means of a liquid, called sealant, and the solidification thereof. In a process step of closing a container by sealing, the sealant is, preferably the outer polymer layer. In the case of adhesive bonding, chemical bonds form between the interfaces or surfaces of the two articles to be joined and create the join. It is often advantageous in the case of sealing or adhesive bonding to press together the faces that are to be sealed or adhesively bonded. A preferred pressing method of at least two layers is compression of a first surface of a first of the two layers on to a second surface of the second of the two layers that faces the first surface across at least 20%, preferably at least 30%, more preferably at least 40%, more preferably at least 50%, more preferably at least 60%, more preferably at least 70%, even more preferably at least 80%, even more preferably at least 90%, most preferably at least 95%, of the first surface. A particularly preferred joining method is sealing. A preferred sealing method comprises, as steps, heating, overlaying and pressing, the steps preferably being effected in this sequence. Another sequence is likewise conceivable, especially the sequence of laying, heating and pressing. A preferred heating method is heating of a polymer layer, preferably a thermoplastic layer, more preferably a polyethylene layer or a polypropylene layer or both. A further preferred heating method is heating of a polyethylene layer to a temperature within a range from 80 to 140°C, more preferably from 90 to 130°C, most preferably from 100 to 120°C. A further preferred heating method is heating of a polypropylene layer to a temperature within a range from 120 to 200°C, more preferably from 130 to 180°C, most preferably from 140 to 170°C. A further preferred heating method is effected to a sealing temperature of the polymer layer. A preferred heating method can be effected by means of radiation, by means of hot gas, by means of contact with a hot solid, by means of mechanical vibrations, preferably by means of ultrasound, by convection, or by means of a combination of at least two of these measures. A particularly preferred heating method is effected by inducement of an ultrasound vibration. In particular, closing of the top region of the container precursor in step f] of process 3 is effected via ultrasound sealing.

### Irradiation

In the case of irradiation, any type of radiation suitable to the person skilled in the art for softening of the plastics of the polymer layers present is useful. Preferred types of radiation are IR and UV rays, and microwaves. In the case of the IR rays that are also used for IR welding of sheetlike composites, wavelength ranges of 0.7 to 5 µm should be mentioned. In addition, it is possible to use laser beams within the wavelength range from 0.6 to less than 1.6 µm. In connection with the use of IR rays, these are generated by various suitable sources that are known to the person skilled in the art. Short-wave radiation sources in the range from 1 to 1.6 µm are preferably halogen sources. Medium-wave radiation sources within the range from > 1.6 to 3.5 µm are, for example, metal foil sources. Long-wave radiation sources in the range of > 3.5 µm that are frequently used are quartz sources. Lasers are being used ever more frequently. For instance, diode lasers within the wavelength range from 0.8 to 1 µm, Nd:YAG lasers at about 1 µm and CO₂ lasers at about 10.6 µm are in use. High-frequency techniques with a frequency range from 10 to 45 MHz, frequently within a power range from 0.1 to 100 kW, are also in use.

### Ultrasound

In the case of ultrasound, the following treatment parameters are preferred:

| | |
|---|---|
| P1 | a frequency within a range from 5 to 100 kHz, preferably within a range from 10 to 50 kHz and more preferably within a range from 15 to 40 kHz; |
| P2 | an amplitude within a range from 2 to 100 µm, preferably within a range from 5 to 70 µm and particularly preferable within a range from 10 to 50 µm; |
| P3 | an oscillation time (being the period of time within which an oscillation body such as a sonotrode or inductor has a contact oscillation effect on the sheetlike composite) within a range from 50 to 1000 ms, preferably within a range from 100 to 600 ms and particularly preferable within a range from 150 to 300 ms. |

In suitable selection of the radiation and oscillation conditions, it is advantageous to take account of the intrinsic resonances of the plastic and to select frequencies close to these.

### Contact with a solid

Heating via contact with a solid can be effected, for example, by means of a heating plate or heating mould in direct contact with the sheetlike composite, which releases the heat to the sheetlike composite.

### Hot gas

The hot gas, preferably hot air, can be directed onto the sheetlike composite by means of suitable blowers, exit openings or nozzles, or a combination of these. Frequently, contact heating and the hot gas are used simultaneously. For example, a holding device for a container precursor formed from the sheetlike composite, through which hot gas flows and which is heated as a result and releases the hot gas through suitable openings, can heat the sheetlike composite through contact with the wall of the holding device and the hot gas. In addition, the container precursor can also be heated by fixing the container precursor with a container precursor holder and directing the flow from one or two or more hot gas nozzles provided in the container precursor holder onto the regions of the container precursor that are to be heated.

### Container precursor

A container precursor is a precursor of a closed container produced during the production of a closed container. The container precursor here preferably includes the sheetlike composite in cut-to-size form. A preferred container precursor has been cut to size and is designed for the production of a single closed container. Another term used for a preferred container precursor which has been cut to size and is designed for the production of a single closed container is also referred to a jacket or a sleeve. The jacket or sleeve here includes the folded sheetlike composite. The jacket or sleeve moreover includes a longitudinal seam and is open in a top region and in a base region. The term tube is often used for a typical container precursor which has been cut to size and is designed for the production of a plurality of closed containers.

A preferred container precursor includes the sheetlike composite according to the invention in a manner such that the sheetlike composite has been folded at least once, preferably at least twice, more preferably at least 3 times, most preferably at least 4 times, thereby obtaining longitudinal folds. A preferred container precursor is of a one-piece design. It is particularly preferable that a bottom region of the container precursor is of a one-piece design with a lateral region of the container precursor.

### Container

The closed container of the invention can have a plurality of different shapes, but preference is given to a structure that is in essence a rectangular parallelepiped. It is moreover possible that the entire area of the container is composed of the sheetlike composite, or that the container has a two- or multipart structure. In the case of a multipart structure it is conceivable that other materials are also used alongside the sheetlike composite, an example being plastic, which in particular can be used in the top or bottom regions of the container. However, it is preferable here that at least 50 %, particularly at least 70 % and more preferably at least 90 %, of the area of the container is composed of the sheetlike composite. The container can moreover comprise a device for the discharge of the contents. This can by way of example be formed from plastic and applied to the external side of the container. It is also conceivable that this device has been integrated into the container via "direct injection moulding". According to a preferred embodiment the container of the invention has at least one folded edge, preferably from 4 to 22, or even more folded edges, particularly preferably from 7 to 12 folded edges. For the purposes of the present invention the expression folded edge applies to regions produced when an area is folded. Examples of folded edges that may be mentioned are the longitudinal regions where two respective wall areas of the container meet. These edges are also referred to as longitudinal edges. The container walls in the container are preferably the areas of the container, surrounded by edges. It is preferable that the closed container includes no base that is not of single-piece design with the sheetlike composite or no lid that is not of single-piece design with the sheetlike composite, or both.

### Foodstuff

A preferred closed container of the invention includes a foodstuff. Materials that can be regarded as foodstuff are any of the solid or liquid foodstuffs known to the person skilled in the art for human consumption, and also those for consumption by animals. Preferred foodstuffs are liquid above 5°C, examples being dairy products, soups, sauces, and noncarbonated drinks. There are various methods for filling the container or the container precursor. A first possibility is that the foodstuff and the container or the container precursor are separately, before the filling process, sterilised to the greatest possible extent via suitable measures such as treatment of the container or of the container precursor with H₂O_{2,} UV radiation or other suitable high-energy radiation, plasma or a combination of at least two thereof, and also heating of the food, and that the container or the container precursor is then filled. This filling method is often termed "aseptic filling", and is preferred according to the invention. In another method that is widely used, in addition to or else instead of aseptic filling, the container or container precursor filled with foodstuff is heated to reduce the number of germs. This is preferably achieved via pasteurisation or autoclaving. In this procedure it is also possible to use less sterile foodstuffs and containers or container precursors.

### Hole

The at least one hole that is provided in the carrier layer according to preferred embodiments may have any shape that is known to a person skilled in the art and suitable for various closures or drinking straws. In the context of the invention, particular preference is given to a hole for passage of a drinking straw. The holes often have rounded portions in plan view. Thus, the holes may be essentially circular, oval, elliptical or drop-shaped. The shape of the at least one hole in the carrier layer usually also predetermines the shape of the opening that is produced either by an openable closure which is connected to the container and through which the content of the container is dispensed from the container after opening, or by a drinking straw in the container. Consequently, the openings of the opened container often have shapes that are comparable to or even the same as the at least one hole in the carrier layer. Configurations of the sheetlike composite with a single hole primarily serve for letting out the food or drink product located in the container that is produced from the sheetlike composite. A further hole may be provided, especially for letting air into the container while the food or drink product is being let out.

In the context of covering the at least one hole of the carrier layer, it is preferred that the hole-covering layers are at least partly joined to one another, preferably to an extent of at least 30%, preferably at least 70% and especially preferably at least 90%, of the area formed by the at least one hole. It is also preferred that the hole-covering layers are joined to one another at the edges of the at least one hole and preferably lie against the edges in a joined manner, in order in this way to achieve an improved leak-tightness via a join that extends across the entire area of the hole. The hole-covering layers are often joined to one another across the region that is formed by the at least one hole in the carrier layer. This leads to a good leak-tightness of the container formed from the composite, and consequently to a desired long shelf life of the food or drink products kept in the container. Preferably, the at least one hole has a diameter within a range from 3 to 30 mm, more preferably from 3 to 25 mm, more preferably from 3 to 20 mm, more preferably from 3 to 15 mm, most preferably from 3 to 10 mm. In this case, the diameter of the hole is the length of the longest straight line which begins and ends at the edge of the hole and runs through the geometric centre of the hole.

### Opening/opening aid

The opening of the container is usually brought about by at least partially destroying the hole-covering layers that cover the at least one hole. This destruction can be effected by cutting, pressing into the container or pulling out of the container. The destruction can be effected by means of an opening aid which is joined to the container and is arranged in the region of the at least one hole, usually above the at least one hole, for example also by a drinking straw which is pushed through the hole-covering layers. It is also preferred in a configuration according to the invention that an opening aid is provided in the region of the at least one hole. It is preferred here that the opening aid is provided on the surface area of the composite that represents the outer face of the container. The container also preferably comprises a closure, for example a lid, on the outer face of the container. It is in this case preferred that the closure covers the hole at least partially, preferably completely. Consequently, the closure protects the hole-covering layers, which are less robust in comparison with the regions outside the at least one hole, from damaging mechanical effects. For opening the hole-covering layers that cover the at least one hole, the closure often comprises the opening aid. Suitable as such an opening aid are for example hooks for tearing out at least part of the hole-covering layers, edges or cutting edges for cutting into the hole-covering layers or spikes for puncturing the hole-covering layers, or a combination of at least two of these. These opening aids are often mechanically coupled to a screw lid or a cap of the closure, for example by way of a hinge, so that the opening aids act on the hole-covering layers to open the closed container when the screw lid or the cap is actuated. Closure systems of this kind, comprising composite layers covering a hole, openable closures that cover this hole and have opening aids, are sometimes referred to in the specialist literature as "overcoated holes" with "applied fitments".

### TEST METHODS

The following test methods were used for the purposes of the invention. Unless otherwise stated the measurements were made at ambient temperature 25°C, ambient air pressure 100 kPa (0.986 atm) and relative humidity 50%.

### Separation of individual layers

If the individual layers of a laminate - for example the barrier layer, the outer polymer layer, the inner polymer layer or the intermediate polymer - are to be examined herein, the layer to be examined is first separated from the laminate as described below. Three specimens of the sheetlike composite are cut to size. For this purpose, unless stated otherwise, unfolded and ungrooved regions of the sheetlike composite are used. Unless stated otherwise, the specimens have dimensions of 4 cm × 4 cm. Should other dimensions of the layer to be examined be necessary for the examination to be conducted, sufficiently large specimens are cut out of the laminate. The specimens are introduced into an acetic acid bath (30% acetic acid solution: 30% by weight of CH₃COOH, remainder to 100% by weight H₂O) heated to 60°C for 30 minutes. This detaches the layers from one another. If required, the layers may also be cautiously manually pulled apart here. Should the desired layer not be sufficiently readily detachable, as an alternative, new specimens are used and these are treated in an ethanol bath (99% ethanol) as described above. If residues of the carrier layer (especially in the case of a cardboard layer as carrier layer) are present on the layer to be examined (for example the outer polymer layer or the intermediate polymer layer), these are cautiously removed with a brush. The sample is subsequently rinsed with distilled water. One sample of size sufficient for the examination to be conducted (unless stated otherwise, with an area of 4 cm²) is cut out of each of the three films thus prepared. These samples are then stored at 23°C for 4 hours and hence dried. Subsequently, the three samples can be examined. Unless stated otherwise, the result of the examination is the arithmetic mean of the results for the three samples.

### MFR value

The MFR value (mass based melt flow rate in g/10 min) is measured in accordance with the standard DIN EN ISO 1133-1:2012-03 (unless otherwise stated at 190°C with 2.16 kg). Therein, method A as defined in the standard is used applying the standardised extrusion tool. The sample is conditioned in accordance with DIN EN ISO 1872-1. Sample mass and time interval for cutting off the extrudate are selected in accordance with table 4 on page 16 of DIN EN ISO 1133-1:2012-03. In accordance with the comment under the index c below the table 4, the mass is to be determined at an accuracy of 0.1 g.

### Density

Density is measured in accordance with the standard DIN EN ISO 1183-1:2012-04. Therein, method B (section 5.2 of the standard), applying a liquid pycnometer, is used. The sample to be studied is conditioned in accordance with DIN EN ISO 1872-1:199-10. Distilled water is used as the immersion liquid. The test temperature is 23 °C. No buoyancy correction is applied.

### Melting temperature

Sample preparation for differential scanning calorimetry (DSC):
In case of a layer of a laminate, the material to be studied is separated from the other layers of the laminate as described above. A sample of at least 1.0 mg is weighed with a Kern 770 precision balance from Kern & Sohn GmbH, Balingen, Germany. For this purpose, the empty DSC pan is tared one the balance. Then the sample is weighed. Subsequently, the pan is closed with a lid on a press. The lid should have a small hole, so that the pan will not be deformed during DSC measurement. The sample and the crucible must not be deformed during the DSC measurement. Care must be taken not to touch the sample or the crucible by bare hand during sample preparation.

### Differential scanning calorimetry (DSC):

The melting temperature is determined in accordance with standard DIN EN ISO 11357-3:2011(E). As described therein by reference, the differential scanning calorimetry is conducted according to standard DIN EN ISO 11357-1, here version 11357-1:2010-03. The following details apply in addition or in the alternative to what is given in the standard. The calorimeter is a DSC 8000 from PerkinElmer Inc. In the DSC-method, the heat flow is measured as a function of the temperature. The graph of the measurement therefore shows the heat flow (dQ/dt) on the ordinate axis as a function of the temperature (T) on the abscissa axis. The endothermic direction is always upwards, as in note 2 to section 3.1 of DIN EN ISO 11357-1:2010-03. According to section 4.2 of standard DIN EN ISO 11357-1:2010-03, a heat flow differential calorimetry is carried out. In this case, the reference crucible is always empty and, according to section 3.10 of DIN EN ISO 11357-1:2010-03, the reference position is always used for the temperature. Nevertheless, a reference crucible must always be used. The flushing gas used (sections 5.5 and 9.1.2 of DIN EN ISO 11357-1:2010-03 is nitrogen. Prior to each measurement, the DSC instrument is calibrated according to sections 8.2 to 8.4 of DIN EN ISO 11357-1:2010-03 using the calibrating substances (section 3.2 and 5.4 of DIN EN ISO 11357-1:2010-03) indium and zinc (as per annex C of DIN EN ISO 11357-1:2010-03). As recommended in 8.4.2 of DIN EN ISO 11357-1:2010-03, the heat calibration is carried out using indium as calibrating substance. The crucible is fed to the calorimeter via the auto-sampler. Details about the sample are entered via the editor (name, weight, method of measurement, position on the auto sampler, memory location). The measurements are carried out in dynamic mode (3.9.5 of DIN EN ISO 11357-1:2010-03). In this case the sample is pre-treated by first heating from 35 °C to 160 °C at 20 °C/min and maintaining the temperature for 1 minute. Thereafter, the sample is cooled to 35 °C at 2 °C/min. After that, the measurement process is carried out with a heating rate of 20°C/min up to 160°C.

### Evaluation:

For the evaluation of the measurement, only the second heating curve described above is used. The curve can be selected in the menu under "curves" and there "heatflow". The selected curve is coloured in blue, the rest of the data is red and can be removed via "remove curve". Then, the melting temperature can be determined from the data via selecting "peak area" in the menu "calc". The peak is marked and then evaluated automatically. If a sample has more than peak, i.e. more than one melting temperature, the one of these at the lowest temperature is meant in case of any reference herein to a single melting temperature.

### Viscosity number of PA

The viscosity number of PA is measured in accordance with the standard ISO 307 in 95% sulphuric acid.

### Oxygen transmission rate (OTR)

### Sheetlike composite:

Oxygen transmission rate of a sheetlike composite is determined according to standard ASTM D3985-05 (2010). The sample to be examined, unless stated otherwise, is taken from an ungrooved and unfolded region of the laminate. In addition, the sample to be examined is tested with the side facing outward in the laminate facing the test gas. The area of the sample is 50 cm². The measurements are conducted at an ambient temperature of 23°C, an ambient air pressure of 100 kPa (0.986 atm) and a relative air humidity of 50%. The test instrument is a Ox-Tran 2/22 from Mocon, Neuwied, Germany. The measurement is conducted without compressed air compensation. For the measurements, samples at ambient temperature are used. Further settings and factors that affect the measurement - especially the rest of those listed under point 16 of the standard ASTM D3985-05 (2010) - are defined by the instrument used and the proper use and maintenance thereof according to the manufacturer's handbook.

### Container:

### Sample preparation:

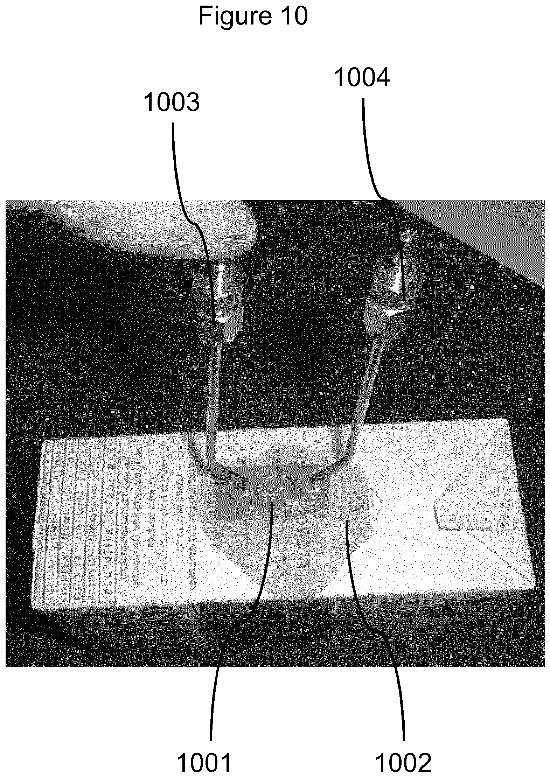

A hole is cut into a side panel of the filled closed container. The dimensions of the hole are 10 mm × 40 mm. The container is emptied through the hole. Afterwards, a plate having tubes as gas inlet and gas outlet is put on the hole of the container such that the hole is fully covered by the plate. The gas inlet and the gas outlet extend through the hole into the interior of the container. In order to obtain a gas tight connection between plate and container, an epoxy resin, Devcon 5 Minute^{®} Epoxy by company ITW Engineered Polymers, is used as sealing compound. The resulting setup is shown in figure 10. Further, the container is connected to the measurement device Ox-tran Model 2/21, Mocon, Neuwied, Germany via the tubes. The device is operated according to the software which comes along with the device.

### Measurement:

Measurement of the OTR is conducted with the Ox-tran Mode12/21 device (Mocon, Neuwied, Germany) and the according software. Therein, the measurement is in accordance with the standards ASTM D3985 (2010), DIN 53380-3 (1998-07), ASTM F-2622, ISO 14663-2 Annex C or ISO 15105-2 (2003-02). Measurement is conducted at 23 °C and 50 % relative air humidity for a duration of 24 h. Five containers which are identical in construction and which have been produced identically are prepared and studied as described above and the arithmetic mean is calculated and presented in volume of O₂ in ml / (package · year).

### Water vapour transmission rate (WVTR)

### Sheetlike composite:

Water vapour transmission rate of a sheetlike composite is determined according to standard ASTM F1249-13. The sample to be examined, unless stated otherwise, is taken from an ungrooved and unfolded region of the laminate. In addition, the sample to be examined is tested with the side facing inward in the laminate (the side facing the contents of the container) facing the elevated humidity. The measurement area of the sample is 50 cm². The measurements are conducted at an ambient temperature of 23°C, an ambient air pressure of 100 kPa (0.986 atm) and a relative air humidity of 50% on one side of the sample and of 0% on the other side of the sample. The test instrument is a Permatran - W Model 3/33 from Mocon, Neuwied, Germany. For the measurements, samples at ambient temperature are used. Further settings and factors that affect the measurement - especially the rest of those listed under point 12 of the standard ASTM F1249-13 - are defined by the instrument used and the proper use and maintenance thereof according to the manufacturer's handbook.

### Container:

### Sample preparation:

A hole is cut into a side panel of the filled closed container. The dimensions of the hole are 10 mm × 40 mm. The container is emptied through the hole and the container is left for drying.

After the container interior has dried, a plate having tubes as gas inlet and gas outlet is put on the hole of the container such that the hole is fully covered by the plate. The gas inlet and the gas outlet extend through the hole into the interior of the container. In order to obtain a gas tight connection between plate and container, an epoxy resin, Devcon 5 Minute^{®} Epoxy by company ITW Engineered Polymers, is used as sealing compound. The resulting setup is shown in figure 10. Further, the container is connected to the measurement device Permatran - W Model3/33 from Mocon, Neuwied, Germany via the tubes. The device is operated according to the software which comes along with the device.

### Measurement:

The WVTR is determined according to the ASTM F1249-13 standard. The measuring surface of the sample corresponds to the inner surface of the sample. The measurements are performed at an ambient temperature of 23 °C, an ambient air pressure of 100 kPa (0.986 atm) and an ambient (outside the container) relative humidity of 50 %. At the beginning of the measurement, the relative humidity in the container is 0 %. The tester is a Permatran - W Model3/33 from Mocon, Neuwied, Germany. For the measurements samples with the ambient temperature are used. Further settings and influencing factors for the measurement - in particular the other factors listed under point 12 of ASTM F1249-13 - are predetermined by the measuring instrument used and its proper use and maintenance according the manufacturer's manual. The obtained value of the WVTR is converted to cm² of the container wall (inner side) and year.

### Paperboard moisture content

Paperboard moisture content is measured in accordance with the standard ISO 287:2009.

### Adhesion of layers

Adhesion between two adjacent layers is determined by fixing these onto 90° peel test equipment, for example a "German rotating wheel fixture" from Instron, on a rotating roll which rotates at 40 mm/min during the measurement. The samples were cut to size in advance, into strips of width 15 mm. At one side of the sample the sublayers are separated from one another, and the separated end is clamped into a vertically upwards oriented tensile apparatus. The tensile apparatus has attached measurement equipment for determining the tensile force. During the rotation of the roll, the force required to separate the sublayers from one another is measured. This force corresponds to the adhesion between the layers, and is stated in N/15 mm. The separation of the individual layers can be achieved by way of example mechanically, or via a specific pretreatment, for example via softening of the sample for 3 min in 30% acetic acid at 60°C.

### Molecular weight distribution

Molecular weight distribution is measured by gel permeation chromatography, using light scattering: ISO 16014-3/-5.

### Detection of colourants

Detection of organic colourants can be conducted in accordance with the methods described in "Industrial Organic Pigments, Third Edition" (Willy Herbst, Klaus Hunger Copyright © 2004 WILEY-VCH Verlag GmbH & Co. KGaA, Weinheim ISBN: 3-527-30576-9).

### Bending resistance

The bending resistance is determined according to the bending test method described in the standard ISO 2493-2:2011. For the measurement an L&W Bending Tester code 160 of Lorentzen & Wettre, Sweden is applied. As described in the standard, samples used to determine the bending resistances have a width of 38 mm and a clamping length of 50 mm. Therein, only samples having no groove, fold or edge are used in the bending test. The samples are selected in accordance with ISO 186. The bending resistance is determined by deflecting the sample by 15°. The bending test specified by the standard ISO 2493-2:2011 is a two-point bending test. As referred to herein, a direction in which the sheetlike composite or the carrier layer has a bending resistance is a direction of a straight line connecting the two attack points of the two-point bending test. Preferably, this direction is a direction in which the sheetlike composite or the carrier layer respectively curves upon bending. Perpendicular to the direction of the bending resistance the sheetlike composite or carrier layer preferably forms a straight fold line if the sample is deflected by an angle large enough to fold it.

### Leak tightness of top seals

The test medium used for the leak tightness test is Kristalloel 60 from Shell Chemicals with methylene blue. For this test, 250 containers were produced from the test laminate as described below for the inventive and comparative examples, and were filled with water and closed. The closed containers are subsequently cut along their periphery in each case in such a way as to obtain two cup-like container parts, one of which includes the top region of the container, the other one the bottom region. The parts including the top regions with the top seals are filled with approximately 20 ml of the test medium each and stored for 24 hours. After intervals of one, three and 24 hours, the container parts are inspected with the naked eye on the external side of the top and the bottom region to ascertain whether the test medium there has generated - in the case of leakage of the top seal - blue colourations.

### Compression test

For this test, 5 containers are manufactured according to the corresponding example or comparative example. The purpose of the test is to determine the compressive strength along the longitudinal axis of the container, i.e. the compressive strength in the direction of the longitudinal folds. It may also be used to assess the resilience of filled containers in the static case of storage and in the dynamic case of transportation. The compression test is carried out on the individual containers in accordance with DIN EN ISO12048. The preceding storage of the containers is carried out in accordance with DIN EN ISO 2233:2000. The measuring device used is TIRAtest 28025 (Tira GmbH; Eisfelder Strasse 23/25; 96528 Schalkau, Germany). The mean value of the maximum breaking load (load value) is determined. This describes the value that leads to the failure of the containers.

The invention is described in more detail below via examples and figures, wherein the examples and drawings do not imply any restriction of the invention. The drawings are moreover diagrammatic and not true to scale.

### Laminate production

For the examples according to the invention and the comparative examples which are not according to the invention, laminates with the layer sequences shown in tables 1 and 3 are produced by means of an extrusion coating system which is standard in laminar extrusion processes.

**Table 1: layer sequence used for the laminates of the comparative examples 1 to 40**

| **layer** | **material** | **grammage [g/m²]** |
|---|---|---|
| colour application / decoration | WB121 of Siegwerk Druckfarben AG & Co. KGaA, Germany | - |
| outer polymer layer | see table 2 | 14 (except comparative example 1) |
| carrier layer | Liquid Packaging Board Stora Enso Natura T Duplex, double coating layer, Scott-Bond 200 J/m², residual moisture 7,5 % | 210 |
| intermediate polymer layer | LDPE 19N430 of Ineos GmbH, Cologne, Germany | 20 |
| barrier layer | aluminium foil EN AW 8079 of Hydro Aluminium Deutschland GmbH | here: thickness 6 µm |
| adhesion promoter layer | Escor 6000 HSC of Exxon Mobil Corporation | 4 |
| further polymer layer | LDPE 19N430 of Ineos GmbH, Cologne, Germany | 22 |
| inner polymer layer | blend of | 10 |
| | (1) 30 wt.-% of an mLDPE and | |
| | (2) 70 wt.-% of an LDPE | |

The densities of the polymers used for the outer polymer layers of the comparative examples 2 to 40 are determined in accordance with the measurement method given above. Here, the densities of the granular polymers are determined prior to the extrusion coating process. The results are given in table 2 below. Typically, after processing the polymers to obtain the outer polymer layer via laminar extrusion coating, the densities are about 1 kg/m³ lower. As the density of a specific polymer product has a certain tolerance range, table 2 below lists different densities for the same polymer product. Further, for some of the granular polymers used for the outer polymer layers of the comparative examples 2 to 40 the melting temperatures are determined. Analogously to the density, the melting temperature, typically, drops by about 1 °C upon processing the polymer via laminar extrusion coating to obtain the outer polymer layer from it. The comparative example 1 does not apply an outer polymer layer at all.

**Table 2: Polymers used for the outer polymer layers of the laminates of the comparative examples 1 to 40, densities and melting temperatures thereof**

| | **material of outer polymer layer** | **polymer product** | **density [kg/m³]** | **melting temperature [°C]** |
|---|---|---|---|---|
| comparative example 1 | / | / | / | / |
| comparative example 2 | mPE | Exxon Mobil Exact 2010 | 902 | 95 |
| comparative example 3 | mPE | Queo 0210 | 902 | 97 |
| comparative example 4 | mPE | DOW Affinity PT 1451 G1 | 902 | 98 |
| comparative example 5 | mPE | Braskem Flexus 4100 | 911 | 97 |
| comparative example 6 | mPE | Ineos Eltex PF1315AA | 914 | 96 |
| comparative example 7 | mPE | Exxon Mobil ECD703 | 918 | 110 |
| comparative example 8 | LPDE | LG Lutene LB7500N | 918 | |
| comparative example 9 | LPDE | APC C7100 | 918 | 103 |
| comparative example 10 | LDPE | Braskem LD3002A | 918 | 107 |
| comparative example 11 | LDPE | Ineos 19N430 | 918.5 | 108 |
| comparative example 12 | mPE | DOW Elite 5811 G | 919 | 124 |
| comparative example 13 | LDPE | Sinopec 1C7A-1 | 919 | |
| comparative example 14 | LDPE | DOW PG 7008 | 919 | |
| comparative example 15 | LDPE | Polimeri Riblene GP 20 | 919 | |
| comparative example 16 | LDPE | Ineos 19N430 | 919 | 108 |
| comparative example 17 | LDPE | Exxon Escorene LD258 | 920 | |
| comparative example 18 | LDPE | SCG El-Lene D777C | 920 | 107 |
| comparative example 19 | LDPE | Sabic 2005EC | 920 | 107 |
| comparative example 20 | LDPE | Ineos 19N430 | 920 | 108 |
| comparative example 21 | LDPE | Westlake EC1924AA | 921 | |
| comparative example 22 | LDPE | DOW PG7004 | 922 | 110 |
| comparative example 23 | LDPE | Ineos 23L430 (2015) | 922 | 113 |
| comparative example 24 | LDPE | Sabic 2404EC | 922 | |
| comparative example 25 | LDPE | Borealis CA7230 | 923 | 109 |
| comparative example 26 | LDPE | Westlake EC1924AA | 923 | 113 |
| comparative example 27 | LDPE | Ineos 23L430B | 923 | |
| comparative example 28 | LDPE | Sabic 2404EC | 923 | |
| comparative example 29 | LDPE | Ineos 23L430 (2015) | 924 | 113 |
| comparative example 30 | LDPE | Sabic 2404EC | 924 | |
| comparative example 31 | LDPE | SCG El-Lene D477C | 924 | 112 |
| comparative example 32 | LDPE | Total TPC LDPE LD 0304 | 924 | |
| comparative example 33 | LDPE | Polimeri Riblene DM30 CB | 924 | |
| comparative example 34 | LDPE | Braskem LD4000A | 924 | |
| comparative example 35 | LDPE | APC C4100 | 925 | |
| comparative example 36 | LDPE | Polimeri Riblene DM30 CB | 925 | |
| comparative example 37 | LDPE | Braskem LD4000A | 925 | |
| comparative example 38 | LDPE | SCG El-Lene D477C | 926 | 112 |
| comparative example 39 | LDPE | Ineos 23L430 (2015) | 926 | 113 |
| comparative example 40 | mMDPE hexen copolymer | Total Lumicene M4040 | 938 | |

**Table 3: layer sequence used for the laminates of the examples 1 to 19 and the comparative examples 41 to 61**

| **layer** | **material** | **grammage [g/m²]** |
|---|---|---|
| outer polymer layer | see table 4 | 14 (except comparative example 41) |
| colour application / decoration | TS 600 of Siegwerk Druckfarben AG & Co. KGaA, Germany | - |
| carrier layer | Liquid Packaging Board Stora Enso Natura T Duplex, double coating layer, Scott-Bond 200 J/m², residual moisture 7,5 % | 210 |
| intermediate polymer layer | LDPE 19N430 of Ineos GmbH, Cologne, Germany | 20 |
| barrier layer | aluminium foil EN AW 8079 of Hydro Aluminium Deutschland GmbH | here: thickness 6 µm |
| adhesion promoter layer | Escor 6000 HSC of Exxon Mobil Corporation | 4 |
| further polymer layer | LDPE 19N430 of Ineos GmbH, Cologne, Germany | 22 |
| inner polymer layer | blend of | 10 |
| | (1) 30 wt.-% of an mLDPE and | |
| | (2) 70 wt.-% of an LDPE | |

The densities of the polymers used for the outer polymer layers of the examples 1 to 19 and the comparative examples 42 to 61 are determined in accordance with the measurement method given above. Again, the densities of the granular polymers are determined prior to the extrusion coating process. The results are given in table 4 below. Further, the melting temperatures are also determined for some of the granular polymers used for the outer polymer layers of the examples 1 to 19 and the comparative examples 42 to 61. The comparative example 41 does not apply an outer polymer layer at all.

**Table 4: Polymers used for the outer polymer layers of the laminates of the examples 1 to 19 and the comparative examples 41 to 61, densities and melting temperatures thereof**

| | **material of outer polymer layer** | **polymer product** | **density [kg/m³]** | **melting temperature [°C]** |
|---|---|---|---|---|
| comparative example 41 | / | / | / | / |
| comparative example 42 | mPE | Exxon Mobil Exact 2010 | 902 | 95 |
| comparative example 43 | mPE | Queo 0210 | 902 | 97 |
| comparative example 44 | mPE | DOW Affinity PT 1451 G1 | 902 | 98 |
| comparative example 45 | mPE | Braskem Flexus 4100 | 911 | 97 |
| comparative example 46 | mPE | Ineos Eltex PF1315AA | 914 | 96 |
| comparative example 47 | mPE | Exxon Mobil ECD703 | 918 | 110 |
| comparative example 48 | LPDE | LG Lutene LB7500N | 918 | |
| comparative example 49 | LPDE | APC C7100 | 918 | 103 |
| comparative example 50 | LDPE | Braskem LD3002A | 918 | 107 |
| comparative example 51 | LDPE | Ineos 19N430 | 918.5 | 108 |
| comparative example 52 | mPE | DOW Elite 5811 G | 919 | 124 |
| comparative example 53 | LDPE | Sinopec 1C7A-1 | 919 | |
| comparative example 54 | LDPE | DOW PG 7008 | 919 | |
| comparative example 55 | LDPE | Polimeri Riblene GP 20 | 919 | |
| comparative example 56 | LDPE | Ineos 19N430 | 919 | 108 |
| comparative example 57 | LDPE | Exxon Escorene LD258 | 920 | |
| comparative example 58 | LDPE | SCG El-Lene D777C | 920 | 107 |
| comparative example 59 | LDPE | Sabic 2005EC | 920 | 107 |
| comparative example 60 | LDPE | Ineos 19N430 | 920 | 108 |
| example 1 | LDPE | Westlake EC1924AA | 921 | |
| example 2 | LDPE | DOW PG7004 | 922 | 110 |
| example 3 | LDPE | Ineos 23L430 (2015) | 922 | 113 |
| example 4 | LDPE | Sabic 2404EC | 922 | |
| example 5 | LDPE | Borealis CA7230 | 923 | 109 |
| example 6 | LDPE | Westlake EC1924AA | 923 | |
| example 7 | LDPE | Ineos 23L430B | 923 | |
| example 8 | LDPE | Sabic 2404EC | 923 | |
| example 9 | LDPE | Ineos 23L430 (2015) | 924 | 113 |
| example 10 | LDPE | Sabic 2404EC | 924 | 111 |
| example 11 | LDPE | SCG El-Lene D477C | 924 | 112 |
| example 12 | LDPE | Total TPC LDPE LD 0304 | 924 | |
| example 13 | LDPE | Polimeri Riblene DM30 CB | 924 | |
| example 14 | LDPE | Braskem LD4000A | 924 | |
| example 15 | LDPE | APC C4100 | 925 | |
| example 16 | LDPE | Polimeri Riblene DM30 CB | 925 | |
| example 17 | LDPE | Braskem LD4000A | 925 | |
| example 18 | LDPE | SCG El-Lene D477C | 926 | 112 |
| example 19 | LDPE | Ineos 23L430 (2015) | 926 | 113 |
| comparative example 61 | mMDPE hexen copolymer | Total Lumicene M4040 | 938 | |

Laminates consisting of the layers given in tables 1 to 4 above are produced applying an extrusion coating system of the firm Davis Standard. Therein, the extrusion temperature is in the range from about 280 to 310 °C. In order to allow for applying of the several polymer layers, the polymers are molten in an extruder. For applying a polymer of a layer, the obtained polymer melt is fed via a feed block into a nozzle and from there extruded to the substrate.

In a first step, one hole for each container to be produced from the respective laminate is applied to the carrier layer by die cutting.

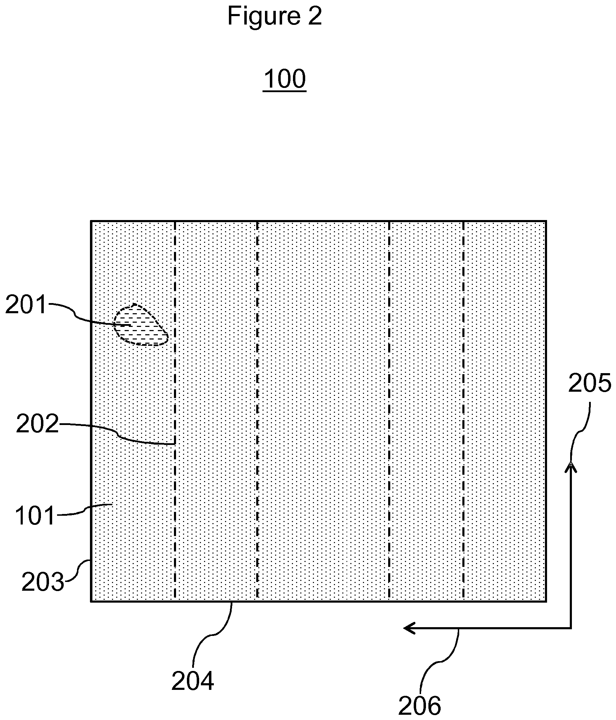

In the comparative examples 41 to 61 as well as the examples 1 to 19, subsequently, a colour application in form of a decoration is printed directly onto the carrier layer by flexographic printing. First, a white primer layer is printed directly onto the carrier layer at maximum area coverage by flexographic printing. Then, 4 inks of different colours of the ink series given in table 3 are applied in 4 subsequent printing steps, wherein after each printing step the applied ink is dried. Thus, a four-colour print decoration is obtained. The decoration includes no unprinted areas for sealing. In particular, also the areas which will later on be used to seal fold flaps (so called "ears") to the container body are printed with decoration. This simplifies design and implementation of the decoration. In particular, no care has to be taken to position any unprinted areas such that they are large enough and at the right position for sealing and at the same time not visible in the end product. This makes register control of the printing process less complex. In addition to the decoration, marks which allow for precise positioning of grooves are printed onto the same side of the carrier layer. Reliable precise introduction of the grooves is only possible after those marks have been printed. The grooves need to be positioned very precise as the later folding of the laminate is effected along those grooves. The precision of the folds, in turn, affects the overall container quality. In a next step, the printed carrier layer is grooved according to the preceding marks, thereby providing groove lines in the carrier layer. In particular, longitudinal grooves, as depicted in figure 2 below, are introduced. Therein, the longitudinal grooves are oriented perpendicular to the running direction or fibre run of the cardboard material of the carrier layer. Hence, in the cuboid container to be produced the running direction or fibre run will be oriented perpendicular to the four longitudinal edges of the container. In the comparative examples 42 to 61 and the examples 1 to 19, the outer polymer layer is extrusion coated to the decoration, thereby covering the holes in the carrier layer. In the comparative example 41, no outer polymer layer is applied. In a following step, the barrier layer is applied to the carrier layer together with the intermediate polymer layer. Subsequently, the adhesion promoter layer, the further polymer layer and the inner polymer layer are co-extruded onto the barrier layer.

In the comparative examples 2 to 40, subsequently to providing the holes in the carrier layer, the outer polymer layer is extrusion coated directly to the carrier layer, thereby covering the holes. The comparative example 1 does not include an outer polymer layer. In each of the comparative examples 1 to 40, the barrier layer is applied to the carrier layer together with the intermediate polymer layer. Subsequently, the adhesion promoter layer, the further polymer layer and the inner polymer layer are co-extruded onto the barrier layer. After the laminate has been obtained, a white primer layer of maximum area coverage, the same decoration as in the other comparative examples and examples and the position marks described above are printed directly onto the outer polymer layer by intaglio printing. Accordingly, an ink system which is suitable for intaglio printing is used (see table 3). Only afterwards, the same grooves as described above are introduced. Here, all the coating steps are conducted prior to the printing and, thus, prior to the grooving. This is because first coating the outer polymer layer, then printing and grooving and then coating the inner layers would be very cumbersome and require a longer process line. In addition, preparing the laminate would take longer which would reduce the overall productivity of laminate production.

### Container production

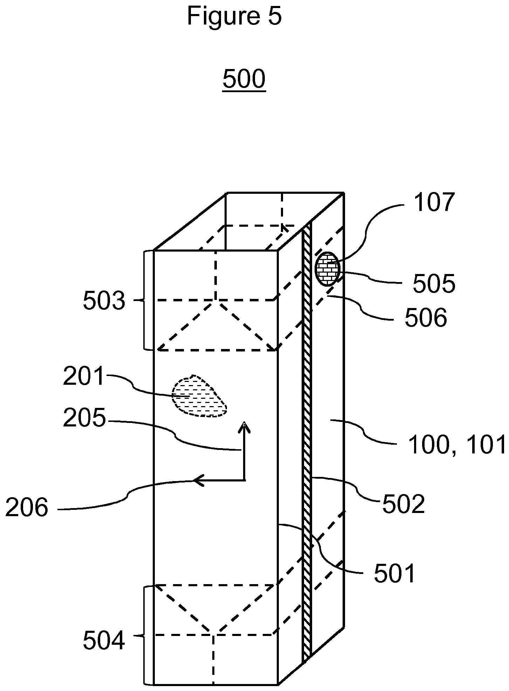

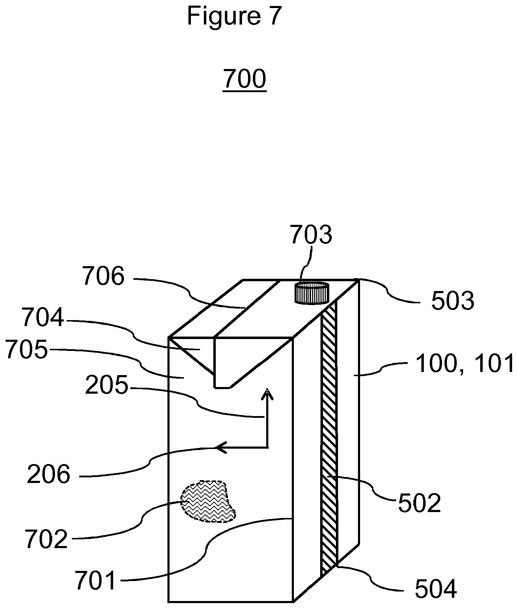

Further, the laminate obtained as described above is cut into sections, wherein each section is suitable for producing a single container from it. Therein, each of the sections comprises one of the holes mentioned above. From each section a container precursor in form of a sleeve as shown in figure 5 is obtained by folding along the 4 longitudinal grooves and heat sealing of overlapping fold areas (longitudinal rims) onto each other, thereby obtaining a longitudinal seam. From this container precursor, a closed container as shown in figure 7 ("brick-type") is formed using a filling machine CFA 712 of SIG Combibloc, Linnich, Germany. Therein, a bottom region is formed by folding and closed by heat sealing. Thus, a cup with an open top region is obtained. The cup is sterilised using hydrogen peroxide. Further, the cup is filled with water. Further, the upper transverse rims of the laminate are brought into contact with each other. These transverse rims a fixed between a sonotrode and a respective counter tool, a so called anvil, of an ultrasound sealing system. The upper transverse rims are sealed to each other via an ultrasound sealing method which is effected using a frequency of 35 kHz. Thereby, the top region of the cup, having the hole, is closed. By further folding the top region is formed and thus, a closed and filled cuboid container is obtained. The fold flaps, so called "ears", which are obtained by forming the container top are heat sealed to the sides of the container body via the outer polymer layer of the laminate as sealant. Further, an opening aid is attached to the container, covering the hole.

### Evaluation

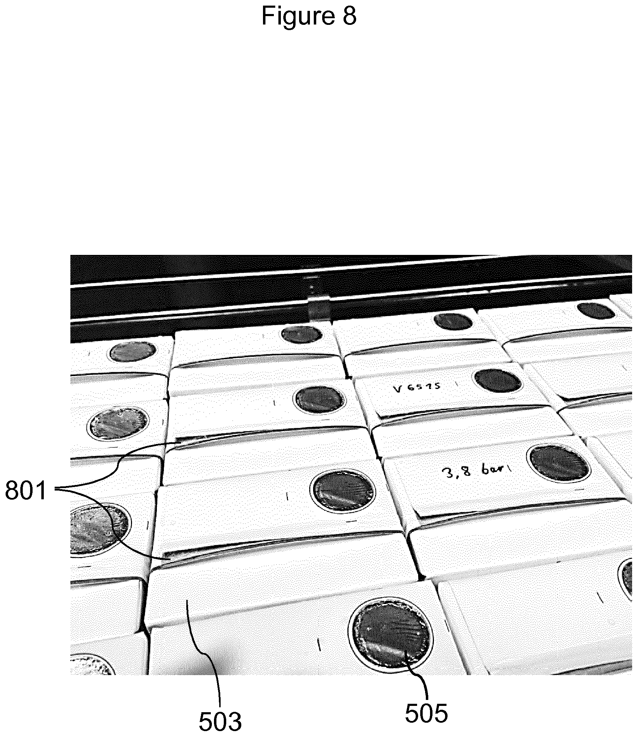

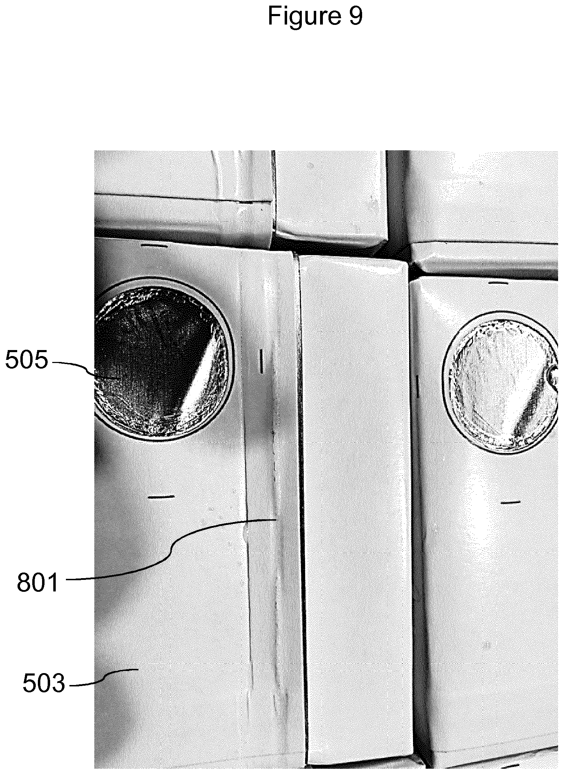

In the production of the containers of the examples and comparative examples, the ultrasound sealing tools, i.e. the sonotrode and the anvil, used to close the containers after filling are observed for a tendency to be stained with polymer. Further, the tools used to provide the carrier layer with the groove lines are observed for wear. Moreover, the fraction of containers produced with a substandard top seal obtained by ultrasound sealing after filling is observed. Typical substandard top seals can be seen in the figures 8 and 9. Substandard top seals of these types may arise from the laminate sticking to the sealing tools upon ultrasound sealing. Such sticking can lead to delamination of the laminate and even to a cardboard fibre tear in the carrier layer. Needless to say that this may also lead to less tight top seals. Accordingly, examples and comparative examples which show a larger fraction of substandard top seals also show a larger fraction of containers which are not leak tight in terms of the above leak tightness test method. The containers of each of the examples and comparative examples are further studied in terms of oxygen transmission rate (OTR) and water vapour transmission rate (WVTR) as described in the measurement methods section.

In the table 5 below, "+++" means a test result which is more favourable than "++", which in turn is more favourable than "+", which is more favourable than "0", which is still more favourable than "-", which is more favourable than "--".

**Table 5: Evaluation results of the comparative examples and the examples**

| | **low staining of ultrasound sealing tools** | **low wear of grooving tools** | **low fraction of substandard top seals** | **low OTR and WVTR** |
|---|---|---|---|---|
| comparative example 1 | +++ | - | +++ | - |
| comparative example 2 | - | - | - | - |
| comparative example 3 | - | - | - | - |
| comparative example 4 | - | - | - | - |
| comparative example 5 | - | - | - | - |
| comparative example 6 | - | - | - | - |
| comparative example 7 | - | - | 0 | - |
| comparative example 8 | - | - | 0 | - |
| comparative example 9 | - | - | 0 | - |
| comparative example 10 | - | - | 0 | - |
| comparative example 11 | - | - | 0 | - |
| comparative example 12 | - | - | 0 | - |
| comparative example 13 | - | - | 0 | - |
| comparative example 14 | - | - | 0 | - |
| comparative example 15 | - | - | 0 | - |
| comparative example 16 | - | - | 0 | - |
| comparative example 17 | 0 | - | + | - |
| comparative example 18 | 0 | - | + | - |
| comparative example 19 | 0 | - | + | - |
| comparative example 20 | 0 | - | + | - |
| comparative example 21 | + | - | ++ | - |
| comparative example 22 | + | - | ++ | - |
| comparative example 23 | + | - | ++ | - |
| comparative example 24 | + | - | ++ | - |
| comparative example 25 | + | - | ++ | - |
| comparative example 26 | + | - | ++ | - |
| comparative example 27 | + | - | ++ | - |
| comparative example 28 | + | - | ++ | - |
| comparative example 29 | ++ | - | +++ | - |
| comparative example 30 | ++ | - | +++ | - |
| comparative example 31 | ++ | - | +++ | - |
| comparative example 32 | ++ | - | +++ | - |
| comparative example 33 | ++ | - | +++ | - |
| comparative example 34 | ++ | - | +++ | - |
| comparative example 35 | ++ | - | +++ | - |
| comparative example 36 | ++ | - | +++ | - |
| comparative example 37 | ++ | - | +++ | - |
| comparative example 38 | ++ | - | +++ | - |
| comparative example 39 | ++ | - | +++ | - |
| comparative example 40 | +++ | - | +++ | - |
| comparative example 41 | +++ | - | +++ | + |
| comparative example 42 | - | + | - | + |
| comparative example 43 | - | + | - | + |
| comparative example 44 | - | + | - | + |
| comparative example 45 | - | + | - | + |
| comparative example 46 | - | + | - | + |
| comparative example 47 | 0 | + | 0 | + |
| comparative example 48 | 0 | + | 0 | + |
| comparative example 49 | 0 | + | 0 | + |
| comparative example 50 | 0 | + | 0 | + |
| comparative example 51 | 0 | + | 0 | + |
| comparative example 52 | 0 | + | 0 | + |
| comparative example 53 | 0 | + | 0 | + |
| comparative example 54 | 0 | + | 0 | + |
| comparative example 55 | 0 | + | 0 | + |
| comparative example 56 | 0 | + | 0 | + |
| comparative example 57 | + | + | + | + |
| comparative example 58 | + | + | + | + |
| comparative example 59 | + | + | + | + |
| comparative example 60 | + | + | + | + |
| example 1 | ++ | + | ++ | + |
| example 2 | ++ | + | ++ | + |
| example 3 | ++ | + | ++ | + |
| example 4 | ++ | + | ++ | + |
| example 5 | ++ | + | ++ | + |
| example 6 | ++ | + | ++ | + |
| example 7 | ++ | + | ++ | + |
| example 8 | ++ | + | ++ | + |
| example 9 | +++ | + | +++ | + |
| example 10 | +++ | + | +++ | + |
| example 11 | +++ | + | +++ | + |
| example 12 | +++ | + | +++ | + |
| example 13 | +++ | + | +++ | + |
| example 14 | +++ | + | +++ | + |
| example 15 | +++ | + | +++ | + |
| example 16 | +++ | + | +++ | + |
| example 17 | +++ | + | +++ | + |
| example 18 | +++ | + | +++ | + |
| example 19 | +++ | + | +++ | + |
| comparative example 61 | +++ | + | +++ | + |

As the laminates of comparative examples 1 and 41 lack an outer polymer layer, there is no sealant for heat sealing the fold flaps to the container body. Accordingly, an additional sealant has to be applied locally. This renders the overall process cumbersome. Moreover, the containers of the comparative examples 1 and 41 are sensitive to exterior humidity due to the lack of an outer moisture barrier. As the cardboard carrier layer tends to absorb moisture from the environment, the integrity of the container tends to be low. Accordingly, these containers show inacceptable results in the compression test, whereas the containers of all other comparative examples and examples perform significantly better in the compression test. Accordingly, the containers of the comparative examples 1 and 41are not suitable to be stacked for transport and storage which makes them practically inacceptable.

The comparative examples 40 and 61 make use of an mMDPE hexen copolymer. Although the results in table 5 seem to suggest that this polymer performance well in the outer polymer layer, this is really not the case. The mMDPE hexen copolymer shows worst performance in extrusion coating from all the polymers used in the comparative examples and examples. In particular, heavy edge waving is observed and an outer polymer layer of uniform grammage can barely be produced by extrusion coating. Further, this copolymer requires more energy to be applied in order to heat seal the fold flaps to the container body and also for creating the longitudinal seal. Hence, energy consumption is higher, cooling and pressing times are longer which decreases the overall productivity of the container manufacturing process. Further, it can be observed that the different LDPE used in the examples and comparative examples, generally, perform better in extrusion coating than the mPE. Hence, LDPE is the best choice of polymer for the outer polymer layer.

As can be seen from the results presented in table 5, a difference in the density of the polymer used to obtain the outer polymer layer of only 1 kg/m³ provides for unexpected technical effects by way of which at least some of the objects of the invention are achieved. In particular, stepping from a density of 919 kg/m³ to 920 kg/m³ provides significantly better results. Further, table 5 shows that advantageous technical effects are obtained over the whole range of densities of the granular polymer from 920 to 926 kg/m³. As the density, typically, drops by about 1 kg/m³ upon processing the polymer to obtain the outer polymer layer, the preceding range corresponds to a density range of the outer polymer layer from 919 to 925 kg/m³. The overall best results are obtained for polymers of densities (prior to coating) in the range from 924 to 926 kg/m³ (corresponds to densities of 923 to 925 kg/m³ of the coated polymers).

Without wanting to be bound to theory, the wear of the grooving tools observed in the comparative examples 1 to 41 seems to be caused by abrasion. In those comparative examples, no polymer layer is coated onto the decoration and the primer layer. Hence, the titanium dioxide particles, which render the primer layer white, could possibly cause the abrasion and, hence, wear of the grooving tools.

Further, examples 1 to 19 and comparative examples 41 to 61 seem to perform better in terms of oxygen and water vapour transmission rates, as the grooving is conducted prior to coating the inner layers to the carrier layer. Accordingly, in particular the barrier layer seems to suffer less from damages which renders OTR and WVTR of the container lower. As described above, the order of the steps of grooving and coating the inner layers to the carrier layer is predetermined by the sequence of the outer layers. If the outer polymer layer is to be disposed at the outer side of the decoration, the carrier layer has to be printed prior to applying the outer polymer layer. Accordingly, printing can be conducted prior to coating, which for reasons of procedural economy includes coating the inner layers. If, however, the decoration is to be printed onto the outer polymer layer, the outer layer needs to be coated to the carrier layer beforehand. In order to keep the overall laminate production process efficient in terms of the size of the overall production line and production times, the inner layers have to be coated to the carrier layer prior to printing as well. Accordingly, grooving is conducted at the laminate including the inner layers. This seems to have a negative effect on oxygen and water vapour transmission rates.

In the drawings:
- Figure 1: is a diagrammatic cross section through a sheetlike composite of the invention;
- Figure 2: is a diagrammatic top view of the sheetlike composite of figure 1;
- Figure 3: is a flow chart of a process of the invention for preparing a sheetlike composite;
- Figure 4: is a flow chart of a process of the invention for preparing a container precursor;
- Figure 5: is a diagrammatic view of a container precursor of the invention;
- Figure 6: is a flow chart of a process of the invention for preparing a closed container;
- Figure 7: is a diagrammatic view of a closed container of the invention;
- Figures 8 and 9: show photographs of the top regions of multiple containers according to the comparative example 59; and
- Figure 10: a photograph of a closed container prepared for the above described OTR or WVTR measurement.

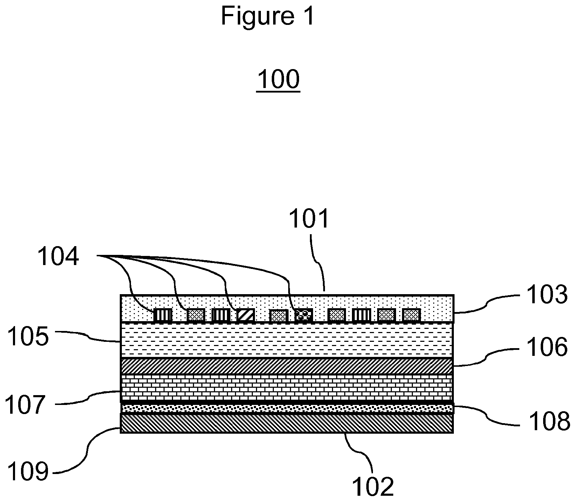

Figure 1 shows a diagrammatic cross section through a sheetlike composite 100 of the invention. The sheetlike composite 100 comprises as a layer sequence in a direction from an outer surface 101 of the sheetlike composite 100 to an inner surface 102 of the sheetlike composite 100: an outer polymer layer 103, a colour application 104, a carrier layer 105, an intermediate polymer layer 106, a barrier layer 107, an adhesion promoter layer 108 and an inner polymer layer 109. The sheetlike composite 100 of figure 1 is configured in accordance with example 13 presented above. Accordingly, the outer polymer layer 103 has a density of 924 kg/m³.

Figure 2 shows a diagrammatic top view of the sheetlike composite 100 of figure 1. The sheetlike composite 100 comprises four longitudinal grooves 202 which each are oriented in a first direction 205 which is a longitudinal direction. In the first direction 205, the sheetlike composite 100 has a first bending resistance of 65 mN. A further direction 206 is perpendicular to the first direction 205. In the further direction 206 the sheetlike composite 100 has a further bending resistance of 160 mN The sheetlike composite further comprises longitudinal rims 203 and transversal rims 204. The longitudinal grooves 202 connect the two transversal rims 204 with each other. The carrier layer 105 comprises a plurality of fibres 201. Therein, a fibre run of the carrier layer 105 is oriented in the further direction 206. Hence, the carrier layer 105 has a transverse fibre. The sheetlike composite 100 is a pre-cut or blank for the production of a single closed container 700 as shown in Figure 7.

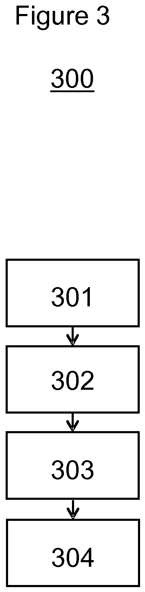

Figure 3 shows a flow chart of a process 300 of the invention for preparing a sheetlike composite 100. The process 300 comprises a process step a) 301 of providing a sheetlike composite precursor which consists of a carrier layer 105 having a hole 505. In a process step b) 302, a colour application 104 in form of a 4-colour-decoration is printed onto a first side of the carrier layer 105. Subsequently, in a process step c) 303, an outer polymer composition having a density of 924 kg/m³ is coated onto the colour application 104 via a laminar extrusion coating method, thereby obtaining an outer polymer layer 103 from the outer polymer composition. In a process step d) 304, an intermediate polymer layer 106, a barrier layer 107, an adhesion promoter layer 108 and an inner polymer layer 109 are coated onto the carrier layer 104 on a further side of the carrier layer 104 which is opposite to the first side. Subsequently, the obtained laminate is provided with grooves and cut to size in order to obtain the sheetlike composite 100 of figure 1.

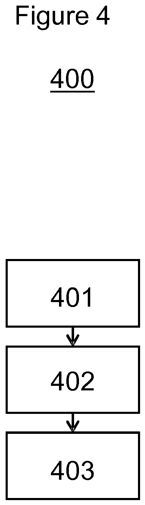

Figure 4 shows a flow chart of a process 400 of the invention for preparing a container precursor 500. In a process step a. 501, the sheetlike composite 100 of figure 1 is provided, for example by the process 300 of figure 3. As shown in figure 2, this sheetlike composite 100 includes a first longitudinal rim 203 and a further longitudinal rim 203. In a process step b. 402, the sheetlike composite 100 is folded along the longitudinal grooves 202. In a process step c. 403, the first longitudinal rim 203 and the further longitudinal rim 203 are pressed onto each other and heat sealed to one another, thereby obtaining a longitudinal seam 502. The container precursor 500 of figure 5 is obtained.

Figure 5 shows a diagrammatic view of a container precursor 500 of the invention. The container precursor 500 shown here is a sleeve which is suitable for the production of a single closed container 700, in particular of the closed container 700 shown in figure 7. Further, the sleeve includes a top region 503 and a bottom region 504. The top region 503 and the bottom region 504 respectively include further grooves 506 which are not longitudinal grooves 202. The top region 503 and the bottom region 504 can respectively be closed by folding along the further grooves 506 and sealing. The closed container 700 as shown in Figure 7 can thus be obtained from the sleeve. Accordingly, the container precursor 500 is a precursor produced in the process for producing the closed container 700. In the container precursor 500 the sheetlike composite 100 has been folded along the longitudinal grooves 202, thereby obtaining four longitudinal folds 501. The sleeve moreover includes a longitudinal seam 502 along which the longitudinal rims 203 of the sheetlike composite 100 have been sealed to one another. The longitudinal folds 501 as well as the longitudinal seam 502 are each oriented in the first direction 205, hence perpendicular to the further direction 206 which is the direction of the transverse fibre of the carrier layer 105. The container precursor 500 further comprises a hole 505 in the carrier layer 105. This hole 505 is covered by the outer polymer layer 103 (not shown here), the intermediate polymer layer 106 (not shown here), the barrier layer 107, the adhesion promoter layer 108 (not shown here) and the inner polymer layer 109 (not shown here) as hole-covering layers. As can be seen in figure 5, the outer surface 101 is facing outward, hence to the environment of the container precursor 500.

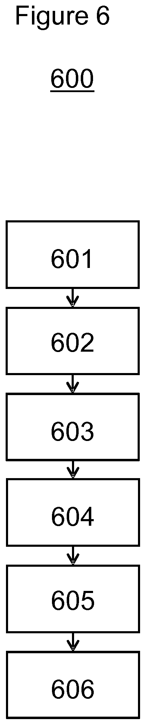

Figure 6 shows a flow chart of a process 600 of the invention for preparing a closed container 700. In a process step a] 601, the container precursor 500 of figure 5 is provided. In a further process step b] 602, the sheetlike composite 100 is folded in the base region 504, thereby forming a base region of a container. The latter base region is closed via heat sealing with hot gas in a process step c] 603. The obtained cup-like container is sterilised and then filled with a foodstuff 702 in a process step d] 604. In a subsequent process step e] 605, the sheetlike composite 100 is folded further in the top region 503, thereby forming a top region of the container. This latter top region is closed by ultrasound sealing regions of the inner surface 102 of the sheetlike composite 100 to each other. Therein, regions of the outer surface 101 of the sheetlike composite 100 are contacted with a sonotrode and an anvil of an ultrasound sealing system, respectively. Then fold flaps 704 which have been obtained by forming the top region of the container are heat sealed to the container body 705, thereby obtaining the closed container 700 of figure 7.

Figure 7 shows a diagrammatic view of a closed container 700 of the invention. The closed container 700 can be obtained by the process of figure 6. Accordingly, the closed container 700 includes the sheetlike composite 100 of Figure 1. The closed container 700 further includes 12 edges, 4 of which are longitudinal edges 701. The closed container 700 surrounds an interior which includes a foodstuff 702. The foodstuff 702 can be liquid, but can also include solid constituents. The closed container 700 shown in Figure 7 is of one-piece design. In its top region 503, a top seal 706 has been obtained by ultrasound sealing. Therein, the inner polymer layer 109 has been used as sealant. The closed container 700 can moreover be provided with a fitment to improve ease of opening. Here, the hole 505 in the carrier layer 105 of the sheetlike composite 100 is covered by a cap 703 with an opening aid which is attached to the closed container 700. The closed container 700 is of the so called brick-type which has a cuboid shape. Fold flaps 704 have been joined to the container body 705 by heat sealing using the outer polymer layer 103 as sealant.

Figures 8 and 9 each show a photograph of multiple containers according to the comparative example 56. Both of these figures show views on the top regions 503 of the containers. Accordingly, the holes 505 in the carrier layer 105 can be seen. Further, the containers have substandard top seals 801. Along these top seals, the laminates suffered from delamination. The top seals 801 of figure 8 even show cardboard fibre tears of the carrier layer 105.

Figure 10 shows a photograph of a closed container prepared for the above described OTR or WVTR measurement. The plate 1001 having the gas inlet 1003 and the gas outlet 1004 can be seen. The plate 1001 is glued to the container in a gas tight manner via the sealing compound 1002. For measuring the OTR or WVTR of the container, the respective measurement device is to be connected to the gas inlet 1003 and the gas outlet 1004.

### LIST OF REFERENCE NUMERALS

- **100**: sheetlike composite of the invention
- **101**: outer surface
- **102**: inner surface
- **103**: outer polymer layer
- **104**: colour application
- **105**: carrier layer
- **106**: intermediate polymer layer
- **107**: barrier layer
- **108**: adhesion promoter layer
- **109**: inner polymer layer
- **201**: plurality of fibres
- **202**: longitudinal groove
- **203**: longitudinal rim
- **204**: transversal rim
- **205**: first direction
- **206**: further direction
- **300**: process of the invention for preparing a sheetlike composite
- **301**: process step a)
- **302**: process step b)
- **303**: process step c)
- **304**: process step d)
- **400**: process of the invention for preparing a container precursor
- **401**: process step a.
- **402**: process step b.
- **403**: process step c.
- **500**: container precursor of the invention
- **501**: longitudinal fold
- **502**: longitudinal seam
- **503**: top region
- **504**: bottom region
- **505**: hole
- **506**: further groove
- **600**: process of the invention for preparing a closed container
- **601**: process step a]
- **602**: process step b]
- **603**: process step c]
- **604**: process step d]
- **605**: process step e]
- **606**: process step f]
- **700**: closed container of the invention
- **701**: longitudinal edge
- **702**: foodstuff
- **703**: cap with opening aid
- **704**: fold flap / "ear"
- **705**: container body
- **706**: top seal
- **801**: substandard top seal
- **1001**: plate
- **1002**: sealing compound
- **1003**: gas inlet
- **1004**: gas outlet

## Claims

1. A sheetlike composite (100), comprising as a layer sequence in a direction from an outer surface (101) of the sheetlike composite (100) to an inner surface (102) of the sheetlike composite (100)
a) an outer polymer layer (103),
b) a colour application (104),
c) a carrier layer (105), and
d) a barrier layer (107);
wherein the outer polymer layer (103) is **characterised by** a density in a range from 920 to 925 kg/m³,
wherein the density is measured in accordance with the standard DIN EN ISO 1183-1:2012-04, method B and applying a liquid pycnometer,
wherein the sample to be studied is conditioned in accordance with DIN EN ISO 1872-1:199-10, distilled water is used as immersion liquid, the test temperature is 23 °C and no buoyancy correction is applied;
wherein the outer polymer layer (103) is further **characterised by** a melting temperature according to the test method described herein in the range from 107.5 to 115 °C; wherein the outer polymer layer (103) comprises at least 50 wt.-%, based on the outer polymer layer (103), of at least one polyolefin.

2. The sheetlike composite (100) according to claim 1, wherein the outer polymer layer (103) is further **characterised by** a melt flow index in the range from 2 to 6 g/10 min, wherein the melt flow index is measured in accordance with the standard DIN EN ISO 1133-1:2012-03, at 190°C with 2.16 kg,
wherein the method A as defined in the standard is used applying the standardised extrusion tool,
wherein the sample to be studied is conditioned in accordance with DIN EN ISO 1872-1,
wherein sample mass and time interval for cutting off the extrudate are selected in accordance with table 4 on page 16 of DIN EN ISO 1133-1:2012-03,
wherein, in accordance with the comment under the index c below the table 4 on page 16 of DIN EN ISO 1133-1:2012-03 the mass is to be determined at an accuracy of 0.1 g.

3. The sheetlike composite (100) according to any of the preceding claims, wherein the colour application (104) adjoins the carrier layer (105).

4. The sheetlike composite (100) according to any of the preceding claims, wherein the outer polymer layer (103) is an outermost layer of the sheetlike composite (100).

5. A process (300), comprising as process steps
a) provision of a sheetlike composite precursor, comprising a carrier layer (105);
b) superimposing a colour application (104) to the carrier layer (105) on a first side of the carrier layer (105);
c) superimposing an outer polymer composition to the colour application (104) on the first side of the carrier layer (105) via an extrusion coating method and obtaining an outer polymer layer (103) from the outer polymer composition;
wherein the process (300) comprises a further process step of superimposing a barrier layer (107) to the carrier layer (105) on a further side of the carrier layer (105) which is opposite to the first side;
wherein the outer polymer composition is **characterised by** a density in a range from 921 to 926 kg/m³,
wherein the density is measured in accordance with the standard DIN EN ISO 1183-1:2012-04, method B and applying a liquid pycnometer,
wherein the sample to be studied is conditioned in accordance with DIN EN ISO 1872-1:199-10, distilled water is used as immersion liquid, the test temperature is 23 °C and no buoyancy correction is applied;
wherein the outer polymer composition is further **characterised by** a melting temperature according to the test method described herein in the range from 108.5 to 116 °C; wherein the outer polymer composition comprises at least 50 wt.-%, based on the outer polymer composition, of at least one polyolefin.

6. A sheetlike composite, obtainable by the process (300) according to claim 5.

7. A container precursor (400), comprising at least one sheetlike region of the sheetlike composite (100) according to any of the claims 1 to 4 and 6.

8. A container (700), comprising at least one sheetlike region of the sheetlike composite (100) according to any of the claims 1 to 4 and 6.

9. A process (400), comprising as process steps:
a. providing at least one sheetlike region of the sheetlike composite (100) according to any of the claims 1 to 4 and 6, this at least one sheetlike region including a first longitudinal rim (203) and a further longitudinal rim (203);
b. folding the at least one sheetlike region; and
c. contacting and joining the first longitudinal rim (203) to the further longitudinal rim (203), thereby obtaining a longitudinal seam (502).

10. A container precursor (400), obtainable by the process (400) according to claim 9.

11. A process (600), comprising as process steps
a] providing the container precursor (500) according to claim 7 or 10;
b] forming a base region of a container by folding the sheetlike region;
c] closing the base region by joining faces of the sheetlike region to each other;
d] filling the container precursor with a foodstuff (702);
e] forming a top region of the container by folding the sheetlike region; and
f] closing the top region by joining faces of the sheetlike region to each other, thereby obtaining a closed container (700).

12. A closed container (700), obtainable by the process (600) according to clam 11.

13. A use of the sheetlike composite (100) according to any of the claims 1 to 4 and 6 for preparing a foodstuff container.

14. A use of a polyolefin having a density in a range from 921 to 926 kg/m³ in an outer polymer layer (103) of a sheetlike composite (100), comprising as a layer sequence in a direction from an outer surface (101) of the sheetlike composite (100) to an inner surface (102) of the sheetlike composite (100)
a) the outer polymer layer (103),
b) a colour application (104),
c) a carrier layer (105), and
d) a barrier layer (107);
wherein the density is measured in accordance with the standard DIN EN ISO 1183-1:2012-04, method B and applying a liquid pycnometer,
wherein the sample to be studied is conditioned in accordance with DIN EN ISO 1872-1:199-10, distilled water is used as immersion liquid, the test temperature is 23 °C and no buoyancy correction is applied;
wherein the polyolefin is further **characterised by** a melting temperature according to the test method described herein in the range from 108.5 to 116 °C;
wherein the polyolefin makes up the outer polymer layer (103) to at least 50 wt.-%, based on the outer polymer layer (103);
wherein the outer polymer layer (103) is obtained by superimposing an outer polymer composition to the colour application (104) via an extrusion coating method.

## Patentansprüche

1. Ein flächenförmiger Verbund (100), der als eine Schichtfolge in einer Richtung von einer äußeren Oberfläche (101) des flächenförmigen Verbunds (100) zu einer inneren Oberfläche (102) des flächenförmigen Verbunds (100) Folgendes umfasst
a) eine äußere Polymerschicht (103),
b) eine Farbanwendung (104),
c) eine Trägerschicht (105), und
d) eine Barriereschicht (107);
wobei die äußere Polymerschicht (103) durch eine Dichte in einem Bereich von 920 bis 925 kg/m³ gekennzeichnet ist,
wobei die Dichte gemäß der Norm DIN EN ISO 1183-1:2012-04, Methode B, unter Verwendung eines Flüssigkeitspyknometers gemessen wird,
wobei die zu untersuchende Probe nach DIN EN ISO 1872-1:199-10 konditioniert wird, destilliertes Wasser als Tauchflüssigkeit verwendet wird, die Prüftemperatur 23 °C beträgt und keine Auftriebskorrektur vorgenommen wird;
wobei die äußere Polymerschicht (103) ferner durch eine Schmelztemperatur gemäß dem hier beschriebenen Testverfahren im Bereich von 107,5 bis 115 °C gekennzeichnet ist;
wobei die äußere Polymerschicht (103) mindestens 50 Gew.-%, bezogen auf die äußere Polymerschicht (103), von mindestens einem Polyolefin umfasst.

2. Der flächenförmige Verbund (100) nach Anspruch 1, wobei die äußere Polymerschicht (103) ferner durch einen Schmelzflussindex im Bereich von 2 bis 6 g/10 min gekennzeichnet ist,
wobei der Schmelzindex nach der Norm DIN EN ISO 1133-1:2012-03, bei 190°C mit 2,16 kg gemessen wird,
wobei das in der Norm definierte Verfahren A unter Anwendung des genormten Extrusionswerkzeugs angewendet wird,
wobei die zu untersuchende Probe nach DIN EN ISO 1872-1 konditioniert wird,
wobei die Probenmasse und das Zeitintervall für das Abschneiden des Extrudats gemäß Tabelle 4 auf Seite 16 der DIN EN ISO 1133-1:2012-03 gewählt werden,
wobei gemäß der Anmerkung unter dem Index c unterhalb der Tabelle 4 auf Seite 16 der DIN EN ISO 1133-1:2012-03 die Masse mit einer Genauigkeit von 0,1 g zu bestimmen ist.

3. Der flächenförmige Verbund (100) nach einem der vorhergehenden Ansprüche, wobei der Farbauftrag (104) an die Trägerschicht (105) angrenzt.

4. Der flächenförmige Verbund (100) nach einem der vorhergehenden Ansprüche, wobei die äußere Polymerschicht (103) eine äußerste Schicht des flächenförmigen Verbunds (100) ist.

5. Ein Verfahren (300), beinhaltend als Verfahrensschritte
a) Bereitstellen eines flächenförmigen Verbundvorläufers beinhaltend eine Trägerschicht (105);
b) Aufbringen eines Farbauftrags (104) auf die Trägerschicht (105) auf einer ersten Seite der Trägerschicht (105);
c) Aufbringen einer äußeren Polymerzusammensetzung auf den Farbauftrag (104) auf der ersten Seite der Trägerschicht (105) über ein Extrusionsbeschichtungsverfahren und Erhalten einer äußeren Polymerschicht (103) aus der äußeren Polymerzusammensetzung;
wobei das Verfahren (300) einen weiteren Verfahrensschritt des Aufbringens einer Barriereschicht (107) auf die Trägerschicht (105) auf einer weiteren Seite der Trägerschicht (105), die der ersten Seite gegenüberliegt, umfasst;
wobei die äußere Polymerzusammensetzung durch eine Dichte in einem Bereich von 921 bis 926 kg/m³ gekennzeichnet ist,
wobei die Dichte gemäß der Norm DIN EN ISO 1183-1:2012-04, Methode B, unter Verwendung eines Flüssigkeitspyknometers gemessen wird,
wobei die zu untersuchende Probe nach DIN EN ISO 1872-1:199-10 konditioniert wird, destilliertes Wasser als Eintauchflüssigkeit verwendet wird, die Prüftemperatur 23 °C beträgt und keine Auftriebskorrektur vorgenommen wird;
wobei die äußere Polymerzusammensetzung ferner durch eine Schmelztemperatur gemäß dem hier beschriebenen Testverfahren im Bereich von 108,5 bis 116 °C gekennzeichnet ist;
wobei die äußere Polymerzusammensetzung mindestens 50 Gew.-%, bezogen auf die äußere Polymerzusammensetzung, von mindestens einem Polyolefin umfasst.

6. Der flächenförmige Verbund, erhältlich durch das Verfahren (300) nach Anspruch 5.

7. Ein Behältervorläufer (400), umfassend mindestens einen flächenförmigen Bereich des flächenförmigen Verbundes (100) nach einem der Ansprüche 1 bis 4 und 6.

8. Ein Behälter (700), umfassend mindestens einen flächenförmigen Bereich aus dem flächenförmigen Verbund (100) nach einem der Ansprüche 1 bis 4 und 6.

9. Ein Verfahren (400) beinhaltend als Verfahrensschritte:
a. Bereitstellen mindestens eines flächenförmigen Bereichs des flächenförmigen Verbunds (100) nach einem der Ansprüche 1 bis 4 und 6, wobei dieser mindestens eine flächenförmige Bereich einen ersten Längsrand (203) und einen weiteren Längsrand (203) aufweist;
b. Falten des mindestens einen flächenförmigen Bereichs; und
c. Kontaktieren und Verbinden des ersten Längsrandes (203) mit dem weiteren Längsrand (203), wodurch eine Längsnaht (502) entsteht.

10. Der Behältervorläufer (400), erhältlich nach dem Verfahren (400) gemäß Anspruch 9.

11. Ein Verfahren (600) beinhaltend als Verfahrensschritte
a] Bereitstellen des Behältervorläufers (500) nach Anspruch 7 oder 10;
b] Bilden eines Bodenbereichs eines Behälters durch Falten des flächenförmigen Bereichs;
c] Verschließen des Bodenbereichs durch Verbinden der Flächen des flächenförmigen Bereichs miteinander;
d] Befüllen des Behältervorläufers mit einem Lebensmittel (702);
e] Bilden eines oberen Bereichs des Behälters durch Falten des flächenförmigen Bereichs; und
f] Verschließen des oberen Bereichs durch Verbinden der Flächen des flächenförmigen Bereichs miteinander unter Erhalt eines geschlossenen Behälters (700).

12. Ein geschlossener Behälter (700), erhältlich durch das Verfahren (600) gemäß Anspruch 11.

13. Eine Verwendung des flächenförmigen Verbundes (100) nach einem der Ansprüche 1 bis 4 und 6 zur Herstellung eines Lebensmittelbehälters.

14. Eine Verwendung eines Polyolefins mit einer Dichte in einem Bereich von 921 bis 926 kg/m³ in einer äußeren Polymerschicht (103) eines flächenförmigen Verbundes (100), umfassend als Schichtfolge in einer Richtung von einer äußeren Oberfläche (101) des flächenförmigen Verbundes (100) zu einer inneren Oberfläche (102) des flächenförmigen Verbundes (100)
a) die äußere Polymerschicht (103),
b) eine Farbanwendung (104),
c) eine Trägerschicht (105), und
d) eine Barriereschicht (107);
wobei die Dichte gemäß der Norm DIN EN ISO 1183-1:2012-04, Methode B, unter Verwendung eines Flüssigkeitspyknometers gemessen wird,
wobei die zu untersuchende Probe nach DIN EN ISO 1872-1:199-10 konditioniert wird, destilliertes Wasser als Eintauchflüssigkeit verwendet wird, die Prüftemperatur 23 °C beträgt und keine Auftriebskorrektur vorgenommen wird;
wobei das Polyolefin ferner durch eine Schmelztemperatur gemäß dem hier beschriebenen Testverfahren im Bereich von 108,5 bis 116 °C gekennzeichnet ist;
wobei das Polyolefin die äußere Polymerschicht (103) zu mindestens 50 Gew.-%, bezogen auf die äußere Polymerschicht (103), ausmacht;
wobei die äußere Polymerschicht (103) durch Aufbringen einer äußeren Polymerzusammensetzung auf den Farbauftrag (104) mittels eines Extrusionsbeschichtungsverfahrens erhalten wird.

## Revendications

1. Un composite en forme de feuille (100), comprenant comme séquence de couches dans une direction allant d'une surface extérieure (101) du composite en forme de feuille (100) à une surface intérieure (102) du composite en forme de feuille (100)
a) une couche externe de polymère (103),
b) une application de couleur (104),
c) une couche de support (105), et
d) une couche barrière (107) ;
dans laquelle la couche extérieure de polymère (103) se **caractérise par** une densité comprise entre 920 et 925 kg/m³,
la densité est mesurée conformément à la norme DIN EN ISO 1183-1:2012-04, méthode B, à l'aide d'un pycnomètre à liquide,
dans lequel l'échantillon à étudier est conditionné conformément à la norme DIN EN ISO 1872-1:199-10, de l'eau distillée est utilisée comme liquide d'immersion, la température d'essai est de 23 °C et aucune correction de flottabilité n'est appliquée ;
dans laquelle la couche externe de polymère (103) est en outre **caractérisée par** une température de fusion, selon la méthode d'essai décrite ici, comprise entre 107,5 et 115 °C ;
dans laquelle la couche polymère extérieure (103) comprend au moins 50 % en poids, sur la base de la couche polymère extérieure (103), d'au moins une polyoléfine.

2. Le composite en forme de feuille (100) selon la revendication 1, dans lequel la couche externe de polymère (103) est en outre **caractérisée par** un indice de fluidité à chaud compris entre 2 et 6 g/10 min,
dans lequel l'indice de fluidité est mesuré conformément à la norme DIN EN ISO 1133-1:2012-03, à 190°C avec 2,16 kg,
la méthode A définie dans la norme est utilisée en appliquant l'outil d'extrusion normalisé,
dans lequel l'échantillon à étudier est conditionné conformément à la norme DIN EN ISO 1872-1,
dans lequel la masse de l'échantillon et l'intervalle de temps pour couper l'extrudat sont sélectionnés conformément au tableau 4 à la page 16 de la norme DIN EN ISO 1133-1:2012-03,
dans lequel, conformément au commentaire sous l'index c du tableau 4 à la page 16 de la norme DIN EN ISO 1133-1:2012-03, la masse doit être déterminée avec une précision de 0,1 g.

3. Le composite en forme de feuille (100) selon l'une des revendications précédentes, dans lequel l'application de couleur (104) est adjacente à la couche de support (105).

4. Le composite en forme de feuille (100) selon l'une des revendications précédentes, dans lequel la couche externe de polymère (103) est une couche externe du composite en forme de feuille (100).

5. Un procédé (300) comprenant les étapes suivantes
a) Fournir un précurseur composite en forme de feuille, comprenant une couche de support (105) ;
b) superposer une application de couleur (104) à la couche de support (105) sur une première face de la couche de support (105) ;
c) superposer une composition polymère externe à l'application de couleur (104) sur la première face de la couche support (105) par une méthode de revêtement par extrusion et obtenir une couche polymère externe (103) à partir de la composition polymère externe ;
dans lequel le procédé (300) comprend une étape supplémentaire consistant à superposer une couche barrière (107) à la couche support (105) sur une autre face de la couche support (105) opposée à la première face ;
dans laquelle la composition polymère extérieure est **caractérisée par** une densité comprise entre 921 et 926 kg/m³,
la densité est mesurée conformément à la norme DIN EN ISO 1183-1:2012-04, méthode B, à l'aide d'un pycnomètre à liquide,
dans lequel l'échantillon à étudier est conditionné conformément à la norme DIN EN ISO 1872-1:199-10, de l'eau distillée est utilisée comme liquide d'immersion, la température d'essai est de 23 °C et aucune correction de flottabilité n'est appliquée ;
dans laquelle la composition polymère extérieure est en outre **caractérisée par** une température de fusion, selon la méthode d'essai décrite ici, comprise entre 108,5 et 116 °C ;
dans laquelle la composition polymère extérieure comprend au moins 50 % en poids, sur la base de la composition polymère extérieure, d'au moins une polyoléfine.

6. Un composite en forme de feuille, obtenu par le procédé (300) selon la revendication 5.

7. Un précurseur de récipient (400), comprenant au moins une région en forme de feuille du composite en forme de feuille (100) selon l'une quelconque des revendications 1 à 4 et 6.

8. Un récipient (700), comprenant au moins une région en forme de feuille du composite en forme de feuille (100) selon l'une quelconque des revendications 1 à 4 et 6.

9. Un procédé (400) comprenant les étapes suivantes :
a. fournir au moins une région en forme de feuille du composite en forme de feuille (100) selon l'une quelconque des revendications 1 à 4 et 6, cette au moins une région en forme de feuille comprenant un premier bord longitudinal (203) et un autre bord longitudinal (203) ;
b. plier l'au moins une région en forme de feuille ; et
c. en contacter et en joignant le premier bord longitudinal(203) au second bord longitudinal (203), obtenant ainsi un joint longitudinal (502).

10. Un précurseur de récipient (400), pouvant être obtenu par le procédé (400) selon la revendication 9.

11. Un procédé (600) comprenant les étapes suivantes
a] fournir le précurseur de récipient (500) selon la revendication 7 ou 10 ;
b] former une région de base d'un récipient en pliant la région en forme de feuille ;
c] fermer la région de base en joignant les faces de la région en forme de feuille l'une à l'autre ;
d] remplir le précurseur de récipient avec une denrée alimentaire (702) ;
e] former une région supérieure du récipient en pliant la région en forme de feuille ; et
f] fermer la zone supérieure en joignant les faces de la zone en forme de feuille l'une à l'autre, ce qui permet d'obtenir un récipient fermé (700).

12. Un récipient fermé (700), pouvant être obtenu par le procédé (600) selon le schéma 11.

13. Une utilisation de la feuille composite (100) selon l'une des revendications 1 à 4 et 6 pour la préparation d'un contenant alimentaire.

14. Une utilisation d'une polyoléfine ayant une densité comprise entre 921 et 926 kg/m³ dans une couche extérieure de polymère (103) d'un composite en forme de feuille (100), comprenant en tant que séquence de couches dans une direction allant d'une surface extérieure (101) du composite en forme de feuille (100) à une surface intérieure (102) du composite en forme de feuille (100)
a) la couche externe de polymère (103),
b) une application de couleur (104),
c) une couche de support (105), et
d) une couche barrière (107) ;
la densité est mesurée conformément à la norme DIN EN ISO 1183-1:2012-04, méthode B, à l'aide d'un pycnomètre à liquide,
dans lequel l'échantillon à étudier est conditionné conformément à la norme DIN EN ISO 1872-1:199-10, de l'eau distillée est utilisée comme liquide d'immersion, la température d'essai est de 23 °C et aucune correction de flottabilité n'est appliquée ;
la polyoléfine se **caractérise en outre par** une température de fusion, selon la méthode d'essai décrite ici, comprise entre 108,5 et 116 °C ;
dans lequel la polyoléfine constitue la couche polymère extérieure (103) à hauteur d'au moins 50 % en poids, sur la base de la couche polymère extérieure (103) ;
la couche de polymère externe (103) est obtenue en superposant une composition de polymère externe à l'application de couleur (104) par une méthode de revêtement par extrusion.
